# EUROPÄISCHE PATENTANMELDUNG

(11) **EP 4 782 135 A1**
(43) Veröffentlichungstag der Anmeldung: **29.07.2026**
(21) Anmeldenummer: 26153224.6
(22) Anmeldetag: 21.01.2026
(51) Int. Cl.: B23K 11/06, B23K 11/11, B23K 11/14, B23K 20/04, B23K 20/10, B23K 20/12

(54) **VERFAHREN ZUM VERBINDEN VON WERKSTÜCKEN DURCH PRESSSCHWEISSEN, PRESSSCHWEISSANORDNUNG**

(30) Priorität: 21.01.2025 DE 102025102097
(71) Anmelder: Universität Stuttgart, 70174 Stuttgart (DE)
(72) Erfinder: Werz, Martin, 70563 Stuttgart (DE); Weihe, Stefan, 85114 Buxheim (DE); Walz, Dominik, 70191 Stuttgart (DE)
(74) Vertreter: DREISS Patentanwälte PartG mbB

(57) **Zusammenfassung**

Die Erfindung betrifft ein Verfahren zum Verbinden von Werkstücken (10,12) durch Pressschweißen, das Verfahren umfassend: Bereitstellen einer Pressschweißeinrichtung (14), die wenigstens ein Pressschweißwerkzeug (18) mit einem Schweißelement (20) und wenigstens ein Gestell (24) mit einem Durchgangsabschnitt (28) aufweist; Bereitstellen von zwei Werkstücken (10,12); Zusammendrücken der Werkstücke durch die Pressschweißeinrichtung, wobei wenigstens eines der Werkstücke zwischen dem Pressschweißwerkzeug und einem Gegenhalter (16) zusammengedrückt wird, wobei der Durchgangsabschnitt des Gestells in einem Fügespalt (26) zwischen den Werkstücken angeordnet wird, und wobei der Durchgangsabschnitt eine Druckkraft von dem Pressschweißwerkzeug (18) auf den Gegenhalter (16) überträgt, die auf das wenigstens eine zwischen dem Pressschweißwerkzeug und dem Gegenhalter zusammengedrückte Werkstück wirkt; und Verbinden der Werkstücke unter Ausbildung einer Verbindungsstruktur durch Pressschweißen. Die Erfindung betrifft außerdem eine Pressschweißanordnung (100).

## Beschreibung

Die vorliegende Erfindung betrifft das technische Gebiet des Pressschweißens. Insbesondere betrifft die vorliegende Erfindung ein Verfahren zum Verbinden von Werkstücken durch Pressschweißen und eine Pressschweißanordnung.

Beim Pressschweißen von Werkstücken wird ein Pressschweißwerkzeug mit einem Schweißelement eingesetzt, das in oder auf wenigstens eines der zu schweißenden Werkstücke gepresst wird. Durch Reibung und/oder elektrischen Strom zwischen dem Schweißelement und dem Werkstück wird das Werkstück lokal erwärmt und plastifiziert. Dabei kann das Werkstück lokal je nach Ausführung des Prozesses aufgeschmolzen werden oder vollständig in fester Phase verbleiben.

Beim Pressschweißen wirken hohe Prozesskräfte, die gemäß Stand der Technik durch große Sondermaschinen, Werkzeugmaschinen oder Roboter mit hoher Traglast aufgebracht werden. Typischerweise werden die Prozesskräfte um wenigstens eines der beiden Werkstücke herum geleitet. Damit lassen sich jedoch sehr große Werkstücke wie beispielsweise Schiffssegmente, Blechdächer, Tanks etc. nicht beziehungsweise nicht wirtschaftlich verbinden.

Die Offenlegungsschrift DE 10 2018 111 496 A1 offenbart eine als Rührreibschweißeinrichtung ausgebildete Pressschweißeinrichtung mit einem Gestell, das in der Seitenansicht C-förmig ist. Bei Verwendung der Rührreibschweißeinrichtung ragt eines der Werkstücke in eine Ausbuchung der C-Form des Gestells hinein. Dadurch ist die Anwendung der Rührreibschweißeinrichtung nur im Zusammenhang mit solchen Schweißaufgaben möglich, bei denen eines der Werkstücke derart dimensioniert ist, dass es in die Ausbuchtung passt.

Die Erfindung beschäftigt sich mit der Aufgabe, eine Möglichkeit bereitzustellen, auch sehr große Werkstücke kostengünstig und einfach mittels Pressschweißen miteinander zu verbinden.

Ein erster Aspekt der Offenbarung betrifft ein Verfahren zum Verbinden von Werkstücken durch Pressschweißen.

Das Verfahren umfasst das Bereitstellen einer Pressschweißeinrichtung, die wenigstens ein Pressschweißwerkzeug umfasst. Das Pressschweißwerkzeug weist ein Schweißelement auf. Die Pressschweißeinrichtung weist außerdem wenigstens ein Gestell mit einem Durchgangsabschnitt auf. Das Pressschweißwerkzeug kann insbesondere ein Rührreibschweißwerkzeug sein. Alternativ kann das Pressschweißwerkzeug als Schweißelement mindestens eine Elektrode oder Elektrodenkappe aufweisen.

Das Verfahren umfasst außerdem das Bereitstellen eines aus einem Metallwerkstoff gefertigten ersten Werkstücks und das Bereitstellen eines aus einem Metallwerkstoff gefertigten zweiten Werkstücks. Die beiden Werkstücke werden durch die Pressschweißeinrichtung zusammengedrückt, und zwar derart, dass wenigstens eines der Werkstücke zwischen dem Pressschweißwerkzeug und einem Gegenhalter zusammengedrückt wird. Wenigstens eines der Werkstücke wird also durch das Pressschweißwerkzeug und den Gegenhalter mit einer Druckkraft beaufschlagt. Je nach Pressschweißverfahren können zusätzlich zu der Druckkraft noch weitere Prozesskräfte auf die Werkstücke wirken. Der Gegenhalter kann Teil der Pressschweißeinrichtung sein. Insbesondere wird der Gegenhalter durch das Gestell gebildet. Das Gestell wird mit dem Durchgangsabschnitt in einem zwischen den Werkstücken gebildeten Fügespalt angeordnet. Der Durchgangsabschnitt des Gestells erstreckt sich also durch den Fügespalt, der zwischen den zusammengedrückten Werkstücken gebildet ist. Durch den Durchgangsabschnitt des Gestells wird eine Druckkraft von dem Pressschweißwerkzeug auf den Gegenhalter übertragen, die auf das wenigstens eine Werkstück wirkt, das zwischen dem Pressschweißwertzeug und dem Gegenhalter zusammengedrückt ist. Der Durchgangsabschnitt erstreckt sich derart durch den Fügespalt, dass ein dem Pressschweißwerkzeug zugeordneter erster Teil des Gestells auf einer ersten Seite der Werkstücke angeordnet ist und ein dem Gegenhalter zugeordneter zweiter Teil des Gestells auf einer zweiten Seite der Werkstücke angeordnet ist.

Das Verfahren umfasst außerdem das Verbinden des ersten Werkstücks mit dem zweiten Werkstück unter Ausbildung einer, insbesondere länglichen, Verbindungsstruktur durch Pressschweißen. Die Verbindungsstruktur kann eine Verbindungsnaht sein. Zur Ausbildung einer Verbindungsnaht können das Schweißelement und die zusammengedrückten Werkstücke relativ zueinander entlang einer Fügebahn bewegt werden. Alternativ kann die Verbindungsstruktur wenigstens einen Verbindungspunkt aufweisen, vorzugsweise eine Vielzahl von aneinandergereihten Verbindungspunkten. Auch zur Ausbildung von aneinandergereihten Verbindungspunkten können das Schweißelement und die zusammengedrückten Werkstücke relativ zueinander entlang einer Fügebahn bewegt werden. Die Bewegung kann zur Erzeugung der aneinandergereihten Verbindungspunkte zyklisch gestoppt werden.

Die Erfinder haben erkannt, dass die zugrundeliegende Aufgabe durch ein wie zuvor beschrieben ausgeführtes Verfahren gelöst wird. Da der Durchgangsabschnitt des Gestells in dem Fügespalt angeordnet wird, werden die Prozesskräfte nicht um eines der Werkstücke herumgeführt, sondern durch den Fügespalt geführt. Das Verfahren kann deshalb mit im Wesentlichen beliebig großen Werkstücken ausgeführt werden, weil das Gestell aufgrund der Anordnung in dem Fügespalt nicht derart groß dimensioniert sein muss, dass eines der Werkstücke in einer Ausbuchtung des Gestells untergebracht werden kann. Das Gestell kann folglich vergleichsweise klein dimensioniert werden, wodurch Material und Kosten gespart werden können. Um eine längere Verbindungsnaht und/oder aneinandergereihte Verbindungspunkte auszubilden, kann das Gestell mit dem im Fügespalt angeordneten Durchgangsabschnitt entlang des Fügespalts verlagert werden. Dies ermöglicht es, den Fügespalt in dem Bereich durch die Verbindungsnaht bzw. durch aneinandergereihte Verbindungspunkte zu schließen, in dem zuvor der Durchgangsabschnitt angeordnet war. Die Anordnung des Gestells in dem Fügespalt kann je nach Schweißaufgabe auf jeweils unterschiedliche Art und Weise realisiert werden. Dies wird im Folgenden noch näher erläutert.

Durch das vorgeschlagene Pressschweißverfahren können verschiedene Schweißaufgaben vorteilhaft gelöst werden. Beispielsweise können durch das Pressschweißverfahren Längsverbindungsstrukturen, insbesondere Längsverbindungsnähte, oder Umfangsverbindungsstrukturen, insbesondere Umfangsverbindungsnähte, ausgebildet werden. Das Pressschweißverfahren kann für die Verbindung von verschiedenen Werkstücken genutzt werden. Die Werkstücke können beispielsweise Raketenteile, Siloteile, Treibstofftankteile, Druckbehälterteile, Schiffshüllenteile, Deckpaneele für Schiffen, oder Dachteile sein.

Im Rahmen der Offenbarung bezeichnet der Begriff "Schweißelement" den zum Verschweißen wirksamen und mit mindestens einem der zu verbindenden Werkstücke in Kontakt befindlichen Teil des Pressschweißwerkzeugs. Je nach Ausführung des Pressschweißwerkzeugs kann auch das Schweißelement jeweils unterschiedlich ausgeführt sein.

Im Rahmen der Offenbarung bezeichnet der Begriff "Fügespalt" den temporären Abstand, der zwischen den zusammengedrückten Werkstücken vor deren Verbindung vorhanden ist, und der beim Verbinden der Werkstücke geschlossen wird.

Ein "Zusammendrücken" meint im Rahmen der Offenbarung nicht zwangsläufig, dass keinerlei Relativbewegung zwischen den am Zusammendrücken beteiligten Teilen möglich ist. Zusammendrücken meint im Zusammenhang mit einem Werkstück lediglich, dass das Werkstück durch die Pressschweißeinrichtung mit Druckkräften beaufschlagt wird, die in entgegengesetzter Richtung auf das Werkstück wirken. Insbesondere ist eine Relativbewegung zwischen den zusammengedrückten Werkstücken und dem Schweißelement und/oder dem Gegenhalter möglich. Ein "Zusammendrücken" schließt insbesondere das Aufeinanderpressen von mindestens zwei Werkstücken in überlappender Form durch das Schweißelement ein. Zusätzlich zu den Druckkräften können beim Verbinden der Werkstücke weitere Prozesskräfte auf die Werkstücke wirken.

In einigen Ausführungsformen des Verfahrens werden beide Werkstücke zwischen dem Gegenhalter und dem Pressschweißwerkzeug zusammengedrückt.

In einigen anderen Ausführungsformen des Verfahrens wird nur eines der Werkstücke zwischen dem Gegenhalter und dem Pressschweißwerkzeug zusammengedrückt. In diesen Ausführungsformen kann ein weiteres Pressschweißwerkzeug vorhanden sein, wobei das andere der Werkstücke zwischen dem weiteren Pressschweißwerkzeug und dem Gegenhalter oder einem weiteren Gegenhalter zusammengedrückt wird. Die Druckkraft zwischen dem weiteren Pressschweißwerkzeug und dem Gegenhalter oder dem weiteren Gegenhalter kann durch das Gestell oder durch ein in dem Fügespalt angeordnetes weiteres Gestell übertragen werden.

Das Pressschweißwerkzeug ist vorzugsweise in einem vorderen Bereich der Pressschweißeinrichtung angeordnet. Der Durchgangsabschnitt ist vorzugsweise in einem hinteren Bereich der Pressschweißeinrichtung angeordnet. Bezogen auf die Wirkrichtung der Druckkraft sind also das Schweißelement und der Verbindungsabschnitt radial versetzt angeordnet. Bezogen auf eine Frontansicht der Pressschweißeinrichtung ist der Durchgangsabschnitt hinter dem Schweißelement angeordnet.

Vorzugsweise ist der Gegenhalter beim Ausbilden der wenigstens einen Verbindungsstruktur relativ zu den zusammengedrückten Werkstücken ortsfest. Es ist aber auch möglich, dass auch die Werkstücke und der Gegenhalter beim Ausbilden der Verbindungstruktur relativ zueinander verlagert werden.

Vorzugsweise sind der Gegenhalter und das Schweißelement längs zueinander verschiebbar bzw. können in den einander zugewandten Seiten eine translatorische Relativbewegung zueinander ausführen.

In einigen Ausführungsformen ist wenigstens eines der Werkstücke blechförmig ausgebildet, besonders bevorzugt beide Werkstücke. Bei einer blechförmigen Struktur sind die Länge und die Breite deutlich größer als die Dicke. Eine blechförmige Struktur ist also im Wesentlichen zweidimensional erstreckt. Vorzugsweise sind die Länge und/oder die Breite eines blechförmigen Werkstücks wenigstens 5-mal so groß wie die Dicke des blechförmigen Werkstücks, vorzugsweise wenigstens 10-mal, 20-mal, 50-mal, 100-mal, 200-mal, 500-mal, 1000-mal, 2000-mal oder 5000-mal so groß wie die Dicke des blechförmigen Werkstücks.

Der Krümmungsradius der blechförmigen Werkstücke kann im Bereich der Fügestelle (die Stelle, an der aktuell die Verbindungsstruktur ausgebildet wird) im Vergleich zur Blechdicke groß sein. Vorzugsweise ist der Krümmungsradius wenigstens 10-mal, 20-mal, 50-mal, 100-mal, 200-mal oder 500-mal so groß wie die Dicke der blechförmigen Werkstücke.

Es sind aber auch Werkstücke mit davon abweichenden Strukturen möglich. Beispielsweise kann wenigstens eines der Werkstücke ein Gussteil oder ein Strangpressprofil sein.

In einigen Ausführungsformen ist vorgesehen, dass wenigstens eines der Werkstücke aus einem Aluminiumwerkstoff gefertigt ist. Vorzugsweise sind beide Werkstücke aus einem Aluminiumwerkstoff gefertigt. Es ist aber auch möglich, dass nur eines der Werkstücke aus einem Aluminiumwerkstoff gefertigt ist. Das andere Werkstück ist dann aus einem anderen Metallwerkstoff gefertigt, beispielsweise aus einem Magnesiumwerkstoff oder aus Stahl. Es kann auch keines der beiden Werkstücke aus einem Aluminiumwerkstoff gefertigt sein.

Wird das Schweißelement entlang der Fügebahn bewegt, so korrespondiert der Verlauf der ausgebildeten Verbindungstruktur mit der Fügebahn. In einigen Ausführungsformen ist vorgesehen, dass die Fügebahn einen geraden Verlauf aufweist. Es sind aber auch andere Fügebahnen möglich. Beispielsweise kann die Fügebahn auch einen kurvenförmigen, insbesondere kreisbogenförmigen, Verlauf aufweisen.

In einigen bevorzugten Ausführungsformen ist vorgesehen, dass das Pressschweißverfahren ein Rührreibschweißverfahren, ein Reibquetschschweißverfahren, ein Widerstandspunktschweißverfahren, ein Buckelschweißverfahren, ein Widerstandsrollennahtschweißverfahren, ein Ultraschallschweißverfahren, ein Ultraschallrollnahtschweißverfahren, ein Induktionspressschweißverfahren oder ein Lichtbogenpressschweißverfahren ist.

Vorzugsweise ist das Pressschweißverfahren ein Rührreibschweißverfahren. In diesem Fall wird eine Rührreibschweißeinrichtung mit einem Rührreibschweißwerkzeug eingesetzt. Ein Rührreibschweißwerkzeug weist typischerweise ein Schweißelement auf, das um eine Drehachse drehbar gelagert ist. Üblicherweise ist das Schweißelement als mittig angeordneter, hervorstehender Schweißstift bzw. Pin ausgebildet. Vorzugsweise weist das Schweißelement dabei eine Schmelz- oder Zersetzungstemperatur von wenigstens 1000°C, vorzugsweise wenigstens 1800°C, auf. Üblicherweise weist das Rührreibschweißwerkzeug zusätzlich zu dem Schweißelement eine Schulter auf. Die Schulter kann mit dem Schweißelement drehfest verbunden (mitdrehende Schulter) oder ortsfest sein (feststehende Schulter). Beim Verbinden der Werkstücke liegt die Schulter auf wenigstens einem der Werkstücke auf, während das Schweißelement in wenigstens eines der Werkstücke eindringt. Vorzugsweise ist das Rührreibschweißwerkzeug in einer Werkzeugaufnahme einer Spindel angeordnet. Die Spindel ist durch ein oder mehrere Lager, insbesondere Wälzkörperlager oder Gleitlager, drehbar gelagert. Die Spindel ist durch einen Antrieb, beispielsweise einen elektromotorischen Antrieb, antreibbar. Vorzugsweise ist das Schweißelement unabhängig von dem Gegenhalter um die Drehachse drehbar.

Vorzugsweise ist das Pressschweißverfahren ein Widerstandspunktschweißverfahren oder ein Widerstandsrollennahtschweißverfahren. In der Ausführungsform des Widerstandspunktschweißens können als Schweißwerkzeug insbesondere zylindrische, ballige oder stabförmige Elektroden eingesetzt werden. In der Ausführungsform des Widerstandsrollennahtschweißens kommen als Schweißwerkzeug scheibenförmige oder zylinderförmige rotierende Elektroden zum Einsatz. Die Prozessströme liegen vorzugsweise im Bereich von 100A bis 100.000A, insbesondere im Bereich von 500A bis 10.000A. Bei Widerstandsschweißverfahren sind sowohl Schweißwerkzeug als auch Gegenhalter als Elektroden ausgeführt.

In einigen bevorzugten Ausführungsformen ist vorgesehen, dass wenigstens eines der Werkstücke zur Vergrößerung des Fügespalts, insbesondere vorübergehend, verformt wird. Durch die Verformung wenigstens eines der Werkstücke beziehungsweise die damit einhergehende, insbesondere vorübergehende, Vergrößerung des Fügespalts kann die Anordnung des Durchgangsabschnitts in dem Fügespalt erleichtert werden. Das wenigstens eine Werkstück kann dabei plastisch und/oder elastisch verformt werden. Wird der Durchgangsabschnitt während der Ausbildung der Verbindungstruktur entlang des Fügespalts verlagert, so kann die Vergrößerung des Fügespalts sukzessive rückgängig gemacht werden, um die Werkstücke dann auch in den Bereichen zu verbinden, in denen die Werkstücke zuvor zur Vergrößerung des Fügespalts verformt waren. Vorzugsweise werden beide Werkstücke zur Vergrößerung des Fügespalts, insbesondere vorübergehend, verformt. Vorzugsweise ist wenigstens das verformte Werkstück blechförmig ausgebildet. Ein blechförmiges Werkstück hat, verglichen mit einem dreidimensional erstreckten Werkstück, eine vergleichsweise geringe Steifigkeit und ist deshalb gut verformbar.

In einigen bevorzugten Ausführungsformen ist vorgesehen, dass wenigstens eines der Werkstücke um eine Biegeachse gebogen wird, die sich senkrecht zur Schweißrichtung der Pressschweißeinrichtung erstreckt, vorzugsweise senkrecht zur Schweißrichtung der Pressschweißeinrichtung und senkrecht zur Wirkrichtung der Druckkraft. Eine solche Verformung des Werkstücks ist auf vorteilhafte Art und Weise geeignet zur Aufnahme des Durchgangsabschnitts eines Gestells, das, bezogen auf die Frontansicht der Pressschweißeinrichtung, S-förmig ausgebildet ist. Das Gestell kann aber auch auf andere Art geformt sein. Vorzugsweise werden beide Werkstücke um eine jeweilige Biegeachse gebogen, die sich senkrecht zur Schweißrichtung der Pressschweißeinrichtung erstreckt, aber in Biegerichtungen mit entgegengesetzter Orientierung.

In einigen bevorzugten Ausführungsformen ist vorgesehen, dass wenigstens eines der Werkstücke um eine Biegeachse gebogen wird, die sich parallel zur Schweißrichtung der Pressschweißeinrichtung erstreckt. Eine solche Verformung des Werkstücks ist auf vorteilhafte Art und Weise geeignet für die Aufnahme eines Gestells, das einen Durchgangsabschnitt aufweist, der, bezogen auf die Frontansicht der Pressschweißeinrichtung, mit der Wirkrichtung der Druckkraft einen Winkel zwischen 20° und 70° einschließt. Die Verformung kann aber auch die Verwendung eines Gestells ermöglichen, das einen Durchgangsabschnitt aufweist, der, bezogen auf die Frontansicht der Pressschweißeinrichtung, insgesamt parallel zu der Wirkrichtung der Druckkraft erstreckt ist. Vorzugsweise werden beide Werkstücke um eine jeweilige Biegeachse gebogen, die sich parallel zur Schweißrichtung der Pressschweißeinrichtung erstreckt, und zwar in Biegerichtungen mit entgegengesetzter Orientierung. Die Werkstücke können aber auch in Biegerichtungen mit gleicher Orientierung gebogen werden.

In einigen bevorzugten Ausführungsformen ist vorgesehen, dass wenigstens eines der Werkstücke, insbesondere lokal, um eine Biegeachse gebogen wird, die sich windschief zur Schweißrichtung der Pressschweißeinrichtung erstreckt.

In einigen bevorzugten Ausführungsformen ist vorgesehen, dass das erste Werkstück und das zweite Werkstück überlappend angeordnet und durch die Pressschweißeinrichtung zusammengedrückt werden. Bei diesen Ausführungsformen werden vorzugsweise beide Werkstücke zwischen dem Pressschweißwerkzeug und dem Gegenhalter zusammengedrückt. Die Werkstücke sind dabei insbesondere blechförmig ausgebildet. Durch eine solche überlappende Anordnung kann eine mechanisch besonders robuste Verbindung der beiden Werkstücke miteinander erreicht werden, insbesondere ohne die Verwendung einer zusätzlichen Fügehilfe. Werden die Werkstücke überlappend angeordnet und derart zusammengedrückt, so wird vorzugsweise wenigstens eines der Werkstücke zur Vergrößerung des Fügespalts um eine Biegeachse gebogen, die sich senkrecht zur Schweißrichtung der Pressschweißeinrichtung erstreckt. Werden die Werkstücke überlappend angeordnet, so werden die Werkstücke vorzugsweise auch durch eine Überlappschweißverbindung miteinander verbunden.

In einigen bevorzugten Ausführungsformen ist vorgesehen, dass das erste Werkstück und das zweite Werkstück nebeneinander angeordnet und durch die Pressschweißeinrichtung zusammengedrückt werden. Durch eine solche Anordnung der Werkstücke können die Werkstücke im Sinne eines Stumpfstoßes miteinander verbunden werden. Die Werkstücke sind dabei vorzugsweise blechförmig ausgebildet. Werden die Werkstücke nebeneinander angeordnet und derart zusammengedrückt, so wird vorzugsweise wenigstens eines der Werkstücke zur Vergrößerung des Fügespalts um eine Biegeachse gebogen, die sich parallel zur Schweißrichtung der Pressschweißeinrichtung erstreckt.

In einigen bevorzugten Ausführungsformen ist vorgesehen, dass eine Fügehilfe in oder auf dem Fügespalt angeordnet wird. Im Rahmen der Offenbarung bezeichnet der Begriff "Fügehilfe" ein metallisches Einbringmaterial, das in den Fügespalt eingebracht wird, während der Verbindung der Werkstücke im Fügespalt verbleibt und schließlich die wenigstens eine Verbindungsstruktur mit ausbildet. Durch die Fügehilfe kann der Fügespalt bei nebeneinander angeordneten Werkstücken überbrückt werden. Vorzugsweise weist das Gestell eine Halterung für die Fügehilfe auf. Die Fügehilfe wird also von dem Gestell aus in oder auf dem Fügespalt angeordnet. Beispielsweise kann die Fügehilfe auf eine als Rolle ausgebildete Halterung aufgerollt sein. Die Fügehilfe kann vor der Anordnung in oder auf dem Fügespalt aber auch frei herabhängen. Wird eine Fügehilfe verwendet, so werden die beiden Werkstücke vorzugsweise nebeneinander angeordnet und zusammengedrückt.

In einigen Ausführungsformen ist die Fügehilfe pulverförmig, drahtförmig, bandförmig oder blechförmig ausgebildet. Der Metallwerkstoff der Fügehilfe kann dem Metallwerkstoff des ersten Werkstücks und/oder dem Metallwerkstoff des zweiten Werkstücks entsprechen. Ist der Metallwerkstoff des ersten Werkstücks ein anderer als der des zweiten Werkstücks, so kann die Fügehilfe als Werkstoff auch eine Mischung der Metallwerkstoffe der beiden Werkstücke aufweisen. Es ist auch möglich, dass die Fügehilfe als Werkstoff einen Metallwerkstoff mit höherer Festigkeit aufweist, verglichen mit den Metallwerkstoffen der beiden Werkstücke. Auch ein Metallwerkstoff, der einen sinnvollen Zwischenwert zwischen den mechanisch-technologischen Eigenschaften der Metallwerkstoffe der beiden Werkstücke einnimmt, kann eingesetzt werden, beispielsweise ein Metallwerkstoff der hinsichtlich der Festigkeitseigenschaften, der elektrochemischen Spannungsreihe, der Korrosionsneigung etc. zwischen den Metallwerkstoffen der beiden Werkstücke liegt.

In einigen bevorzugten Ausführungsformen ist vorgesehen, dass das erste Werkstück, das zweite Werkstück und die Fügehilfe durch eine einzige Verbindungstruktur miteinander verbunden werden. Bei diesen Ausführungsformen kann beispielsweise eine pulverförmige, drahtförmige oder blechförmige Fügehilfe verwendet werden. Das Schweißelement weist dabei vorzugsweise einen Durchmesser auf, der größer ist als die Breite des Fügespalts. Das hat zur Folge, dass das Schweißelement gleichzeitig auf die beiden Werkstücke und auf die dazwischen angeordnete Fügehilfe einwirken kann.

In einigen bevorzugten Ausführungsformen ist vorgesehen, dass das erste Werkstück durch eine erste Verbindungstruktur mit der Fügehilfe verbunden wird, und dass das zweite Werkstück durch eine zweite Verbindungstruktur mit der Fügehilfe verbunden wird. Bei diesen Ausführungsformen kann beispielsweise eine blechförmige Fügehilfe verwendet werden. Die Pressschweißeinrichtung weist dabei vorzugsweise ein weiteres Pressschweißwerkzeug mit einem weiteren Schweißelement auf. Die erste Verbindungstruktur wird dann durch das Schweißelement ausgebildet und die zweite Verbindungstruktur, insbesondere zeitgleich, durch das weitere Schweißelement. Es ist aber auch eine zyklisch versetzte Ausbildung der beiden Verbindungstrukturen möglich. Dies kann durch ein einziges Pressschweißwerkzeug oder durch zwei Pressschweißwerkzeuge erreicht werden.

In einigen Ausführungsformen ist vorgesehen, dass die Werkstücke durch wenigstens eine Klemme aneinander lösbar befestigt werden. Dadurch können die Werkstücke vor dem Verbinden in ihrer Position fixiert und ein definierter Fügespalt gewährleistet werden. Die Klemme ist zusätzlich zu dem Pressschweißwerkzeug und dem Gegenhalter vorhanden. Insbesondere ist die Klemme separat von dem Gestell ausgebildet. Die Klemme kann händisch oder automatisiert gelöst und geschlossen werden. Es ist auch möglich, dass die Klemme durch die Pressschweißeinrichtung selbst gelöst wird, insbesondere durch das Gestell. Das Lösen beziehungsweise Schließen der Klemme kann mechanisch, magnetisch, elektromagnetisch, elektromotorisch, pneumatisch oder hydraulisch geschehen. So kann die Pressschweißeinrichtung beispielsweise eine Lösevorrichtung aufweisen, die durch das Betätigen eines Hebels die Klemme löst. Die Klemme kann zweiteilig ausgeführt sein und eine erste Klemmbacke und eine zweite Klemmbacke aufweisen. Das hat den Vorteil, dass die beiden Klemmbacken beim Lösen nicht durch den Fügespalt geführt werden müssen, sondern zunächst auf ihrer jeweiligen Seite der Werkstücke verbleiben können. Je nach Schweißaufgabe kann eine jeweils andere Klemme verwendet werden, wie nachstehend im Zusammenhang mit der Pressschweißanordnung noch näher erläutert wird.

In einigen bevorzugten Ausführungsformen ist vorgesehen, dass der Durchgangsabschnitt entlang des Fügespalts verlagert wird, und dass die Verbindungstruktur in einem zuvor durch den Durchgangsabschnitt belegten Bereich des Fügespalts ausgebildet wird.

In einigen bevorzugten Ausführungsformen ist vorgesehen, dass die Länge der hergestellten Verbindungstruktur größer ist als der Abstand zwischen dem Schweißelement und dem Durchgangsabschnitt. Mit dem Abstand ist vorzugsweise der Abstand in Schweißrichtung gemeint. Die Länge der Verbindungstruktur ist insbesondere mindestens 5, 10, 20, 100, 200, 1000 mal so groß wie der Abstand zwischen dem Schweißelement und dem Durchgangsabschnitt.

In einigen bevorzugten Ausführungsformen ist vorgesehen, dass die Pressschweißeinrichtung relativ zu den Werkstücken verlagert wird. Vorzugsweise wird die Pressschweißeinrichtung durch einen Knickarmroboter, durch eine Seriell- oder Parallelkinematik mit wenigstens 1 und maximal 8 Freiheitsgraden, oder entlang einer physischen Bahn aus linearen und/oder gekurvten Führungselementen verlagert.

Zur weiteren Ausgestaltung des Verfahrens gemäß dem ersten Aspekt können die im Zusammenhang mit dem zweiten Aspekt offenbarten Merkmale dienen, insbesondere im Hinblick auf die Ausführung der Pressschweißeinrichtung.

Ein zweiter Aspekt der Offenbarung betrifft eine Pressschweißanordnung.

Die Pressschweißanordnung umfasst ein aus einem Metallwerkstoff gefertigtes erstes Werkstück und ein aus einem Metallwerkstoff gefertigtes zweites Werkstück. Im Hinblick auf die Form der Werkstücke und die Metallwerkstoffe wird auf die diesbezüglichen Ausführungen im Zusammenhang mit dem ersten Aspekt verwiesen.

Die Pressschweißanordnung umfasst außerdem eine Pressschweißeinrichtung. Die Pressschweißeinrichtung umfasst wenigstens ein Pressschweißwerkzeug. Das Pressschweißwerkzeug weist ein Schweißelement auf. Die Pressschweißeinrichtung weist außerdem wenigstens ein Gestell mit einem Durchgangsabschnitt auf.

Die Werkstücke sind durch die Pressschweißeinrichtung zusammengedrückt, und zwar derart, dass wenigstens eines der Werkstücke zwischen dem Gegenhalter und dem Pressschweißwerkzeug zusammengedrückt ist. Der Gegenhalter und das Pressschweißwerkzeug beaufschlagen also wenigstens eines der Werkstücke mit einer Druckkraft. Das Schweißelement ist vorzugsweise unabhängig von dem Gegenhalter entlang der Wirkrichtung der Druckkraft verlagerbar. Der Abstand zwischen dem Gegenhalter und dem Schweißelement ist also durch Verlagern des Schweißelements entlang der Wirkrichtung der Druckkraft veränderbar. Hierdurch kann das Schweißelement zugestellt werden. Je nach Ausbildung der Pressschweißwerkzeugs, beispielsweise wenn das Pressschweißwerkzeug ein Rührreibschweißwerkzeug ist, kann ein Eindringen des Schweißelements in eines der Werkstücke oder in beide Werkstücke erreicht werden.

Der Durchgangsabschnitt des Gestells ist in einem zwischen den beiden Werkstücken gebildeten Fügespalt angeordnet. Der Durchgangsabschnitt des Gestells überträgt die Druckkraft, die auf das wenigstens eine zwischen dem Pressschweißwerkzeug und dem Gegenhalter zusammengedrückte Werkstück wirkt, vom Pressschweißwerkzeug auf den Gegenhalter. Der Durchgangsabschnitt erstreckt sich hierzu derart durch den Fügespalt, dass ein dem Pressschweißwerkzeug zugeordneter erster Teil des Gestells auf einer ersten Seite der Werkstücke angeordnet ist und ein dem Gegenhalter zugeordneter zweiter Teil des Gestells auf einer zweiten Seite der Werkstücke angeordnet ist.

Die zugrundeliegende Aufgabe wird auch durch eine wie zuvor beschrieben ausgebildete Pressschweißanordnung gelöst. Weil der Durchgangsabschnitt des Gestells in dem Fügespalt angeordnet ist, können die Prozesskräfte durch den Fügespalt geführt werden. Es ist nicht erforderlich, die Prozesskräfte um eines der Werkstücke herumzuführen. Die Pressschweißeinrichtung kann deshalb zum Verbinden von im Wesentlichen beliebig großen Werkstücken verwenden werden. Je nach Fügespalt kann dies durch jeweils unterschiedlich geformte Gestelle erreicht werden, wie nachfolgend noch näher erläutert wird.

Vorzugsweise ist das Pressschweißwerkzeug auf einer ersten Seite der Werkstücke an dem Gestell oder an einem mit dem Gestell verbundenen Teil angeordnet.

Vorzugsweise ist der Gegenhalter auf einer zweiten Seite der Werkstücke an dem Gestell oder an einem mit dem Gestell verbundenen Teil angeordnet.

Es können verschiedene Arten von Pressschweißeinrichtungen in der Pressschweißanordnung eingesetzt sein. In einigen Ausführungsformen ist die Pressschweißeinrichtung eine Rührreibschweißeinrichtung, eine Reibquetschschweißeinrichtung, eine Widerstandspunktschweißeinrichtung, eine Buckelschweißeinrichtung, eine Widerstandsrollennahtschweißeinrichtung, eine Ultraschallschweißeinrichtung, eine Ultraschallrollnahtschweißeinrichtung, eine Induktionspressschweißeinrichtung oder eine Lichtbogenpressschweißeinrichtung.

Vorzugsweise ist die Pressschweißanordnung eine Rührreibschweißanordnung. Hierzu sind die Pressschweißeinrichtung und das Pressschweißwerkzeug als Rührreibschweißeinrichtung bzw. als Rührreibschweißwerkzeug ausgebildet. Ein Rührreibschweißwerkzeug weist ein Schweißelement auf, das um eine Drehachse drehbar gelagert ist. Vorzugsweise entspricht die Drehachse des Schweißelements der Wirkrichtung der Druckkraft.

Das Gestell ist im Bereich des Durchgangsabschnitts vorzugsweise besonders schlank ausgeführt. Bevorzugt ist die Breite des Durchgangsabschnitts kleiner als 100 mm, vorzugsweise kleiner als 50 mm, vorausweise kleiner als 20 mm, vorzugsweise kleiner als 10 mm.

Um die im Bereich des Durchgangsabschnitts aus den Prozesskräften resultierenden Kräfte und Momente bzw. die im Durchgangsquerschnitt wirkenden mechanischen Biege-, Normal- und Schubspannungen aufnehmen zu können, ist der Querschnitt des Durchgangsabschnitts vorzugsweise größer als dessen Breite. Insbesondere ist der Querschnitt wenigstens 5-mal, wenigstens 10-mal, wenigstens 20-mal, wenigstens 50-mal oder wenigstens 100-mal größer als die Breite.

Die Länge des Durchgangsabschnittes beträgt vorzugsweise wenigstens 20 mm, vorzugsweise wenigstens 50 mm, vorzugsweise wenigstens 100 mm, vorzugsweise wenigstens 200 mm. Auch eine Obergrenze für die Länge des Durchgangsabschnitts ist vorteilhaft. Vorzugsweise beträgt die Länge höchstens 1000 mm, vorzugsweise höchstens 500 mm, vorzugsweise höchstens 250 mm.

Der Durchgangsabschnitt ist insbesondere aus hochfesten, besonders bevorzugt aus höchstfesten, Werkstoffen hergestellt.

In einigen bevorzugten Ausführungsformen ist vorgesehen, dass sich der Durchgangsabschnitt, bezogen auf die Frontansicht der Pressschweißeinrichtung, schräg oder senkrecht zu der Wirkrichtung der Druckkraft erstreckt. Ein derart erstreckter Durchgangsabschnitt ist vorteilhaft geeignet, um durch einen zwischen den Werkstücken gebildeten Fügespalt hindurch zu ragen. Dies kann durch eine Verformung der Werkstücke weiter erleichtert werden. Vorzugsweise ist das Pressschweißwerkzeug in einem vorderen Bereich der Pressschweißeinrichtung angeordnet und der Durchgangsabschnitt in einem hinteren Bereich der Pressschweißeinrichtung. Der Durchgangsabschnitt ist also, bezogen auf die Frontansicht der Pressschweißeinrichtung, hinter dem Schweißelement angeordnet.

In einigen bevorzugten Ausführungsformen ist vorgesehen, dass das Gestell, bezogen auf die Frontansicht der Pressschweißeinrichtung, S-förmig ausgebildet ist. Ein S-förmiges Gestell ist dann besonders geeignet, wenn die Werkstücke überlappend angeordnet und zusammengedrückt sind. Der Durchgangsabschnitt erstreckt sich zwischen den beiden überlappend angeordneten Werkstücken. Ein S-förmiges Gestell weist drei Abschnitte auf, die, bezogen auf die Frontansicht der Pressschweißeinrichtung, senkrecht oder schräg zu der Drehachse ausgerichtet und, bezogen auf die Wirkrichtung der Druckkraft, axial versetzt angeordnet sind. Der Durchgangsabschnitt wird dabei durch den mittleren Abschnitt der drei Abschnitte gebildet. Um die Anordnung des Durchgangsabschnitts in dem Fügespalt zu erleichtern, können die beiden Werkstücke um eine jeweilige Biegeachse gebogen sein, die sich senkrecht zu der Schweißrichtung der Pressschweißeinrichtung erstreckt, vorzugsweise in Biegerichtungen mit entgegengesetzter Orientierung.

In einigen bevorzugten Ausführungsformen ist vorgesehen, dass der Durchgangsabschnitt und die Wirkrichtung der Druckkraft, bezogen auf die Frontansicht der Pressschweißeinrichtung, einen Winkel zwischen 20° und 70° einschließen. Ein solcher Durchgangsabschnitt ist vorteilhaft geeignet, um durch einen Fügespalt hindurch zu ragen, der zwischen zwei nebeneinander angeordneten Werkstücken gebildet ist. Um die Anordnung des Durchgangsabschnitts in dem Fügespalt zu erleichtern, können die beiden Werkstücke um eine jeweilige Biegeachse gebogen sein, die sich parallel zur Schweißrichtung der Pressschweißeinrichtung erstreckt.

In einigen bevorzugten Ausführungsformen ist vorgesehen, dass sich der Durchgangsabschnitt, bezogen auf die Frontansicht der Rührreibschweißeinrichtung, parallel zu der Wirkrichtung der Druckkraft erstreckt. Ein Gestell mit einem solchen Durchgangsabschnitt ist mechanisch besonders robust und kann bspw. dann verwendet werden, wenn die Werkstücke nebeneinander angeordnet und zusammengedrückt sind und der Fügespalt eine ausreichende Spaltbreite zur Aufnahme des Durchgangsabschnitts aufweist. Der Fügespalt kann dabei eine Spaltbreite von beispielsweise wenigstens 2 mm und höchstens 200 mm aufweisen.

In einigen bevorzugten Ausführungsformen ist vorgesehen, dass ein Durchmesser des Schweißelements größer ist als eine Spaltbreite des Fügespalts. Folglich kann das Schweißelement auf beide nebeneinander angeordneten Werkstücke gleichzeitig einwirken. Die Breite des Durchgangsabschnitts ist hingegen kleiner als die Spaltbreite des Fügespalts. Folglich kann der Durchgangsabschnitt durch den Fügespalt hindurchragen. Vorzugsweise erstreckt sich der Durchgangsabschnitt dabei, bezogen auf die Frontansicht der Pressschweißeinrichtung, parallel zu der Wirkrichtung der Druckkraft.

In einigen bevorzugten Ausführungsformen ist vorgesehen, dass die Breite des Gestells im Bereich des Durchgangsabschnitts verringert ist. Durch die verringerte Breite wird die Anordnung des Durchgangsabschnitts in dem Fügespalt erleichtert. An den Durchgangsabschnitt kann sich beidseitig jeweils ein Abschnitt des Gestells anschließen, der eine größere Breite aufweist als der Durchgangsabschnitt.

Es ist besonders vorteilhaft, wenn der Durchgangsabschnitt sehr schmal gehalten wird, da dieser Abschnitt aufgrund der geringen Breite die Steifigkeit der Anordnung stark beeinflusst.

Um die Steifigkeit der Pressschweißeinrichtung zu erhöhen, können Gleitschuhe oder Walzen vorhanden sein, die jeweils auf die zu fügenden Werkstücke drücken. Die Gleitschuhe bzw. Walzen können optional auch angetrieben und ggf. auch federvorgespannt sein. Auch andere Aktuatoren zum Aufpressen der Gleitschuhe oder Walzen auf die Werkstücke sind denkbar. Durch abstützende Gleitschuhe bzw. Walzen kann die Steifigkeit der Pressschweißeinrichtung bei sehr schmalen Fügespalten bzw. sehr schmalen Durchgangsabschnitten maßgeblich gesteigert werden.

In einigen bevorzugten Ausführungsformen ist vorgesehen, dass das Pressschweißwerkzeug durch eine Linearführung entlang einer Führungsachse an dem Gestell verlagerbar geführt ist. Die Führungsachse erstreckt sich entlang der Schweißrichtung der Pressschweißeinrichtung. Um zwei Werkstücke mittels Pressschweißen durch eine Verbindungstruktur miteinander zu verbinden, wird typischerweise das Schweißelement relativ zu dem Gegenhalter und zu den zusammengedrückten Werkstücken verlagert. Dies kann durch die Linearführung realisiert werden. Aufgrund der Ausrichtung der Führungsachse kann der Durchgangsabschnitt beim Schweißvorgang im Fügespalt angeordnet sein. Durch die Linearführung ist die Pressschweißeinrichtung im Sinne eines Stepwelders ausgeführt. Das bedeutet, dass die Pressschweißeinrichtung stets nur eine Verbindungstruktur mit einer begrenzten Länge ausbilden kann. Die maximal mögliche Länge der Verbindungnaht wird durch den Verfahrweg des Pressschweißwerkzeugs an der Linearführung definiert. Anschließend muss die Pressschweißeinrichtung neu angesetzt werden, um die bereits gefertigte Verbindungstruktur weiter zu verlängern. Hierbei ist es besonders vorteilhaft, wenn das Schweißelement in das Endloch/Endkrater des zuvor gefertigten Verbindungstrukturabschnitts taucht.

In einigen bevorzugten Ausführungsformen ist vorgesehen, dass der Gegenhalter durch eine Linearführung entlang einer Führungsachse an dem Gestell verlagerbar geführt ist. Die Führungsachse erstreckt sich entlang der Schweißrichtung der Pressschweißeinrichtung. Auch durch eine Verlagerung des Gegenhalters kann die Verbindungstruktur ausgebildet werden. Die Werkstücke werden dabei vorzugsweise mit dem Gegenhalter mitverlagert. Aufgrund der Ausrichtung der Führungsachse kann der Durchgangsabschnitt beim Schweißvorgang im Fügespalt angeordnet sein. Durch die Linearführung ist die Pressschweißeinrichtung im Sinne eines Stepwelders ausgeführt. Das bedeutet, dass die Pressschweißeinrichtung stets nur eine Verbindungstruktur mit einer begrenzten Länge ausbilden kann. Die maximal mögliche Länge der Verbindungnaht wird durch den Verfahrweg des Gegenhalters an der Linearführung definiert. Anschließend muss die Pressschweißeinrichtung neu angesetzt werden, um die bereits gefertigte Verbindungstruktur weiter zu verlängern.

In einigen Ausführungsformen ist vorgesehen, dass die Pressschweißanordnung eine Handhabungseinrichtung wie beispielsweise einen Roboter aufweist. Die Pressschweißeinrichtung, insbesondere das Gestell, ist derart mit der Handhabungseinrichtung bewegungsgekoppelt, dass die Pressschweißeinrichtung durch die Handhabungseinrichtung bewegbar ist.

In einigen bevorzugten Ausführungsformen ist vorgesehen, dass die Pressschweißeinrichtung eine Führungsschiene aufweist. Das Gestell ist entlang einer Bewegungsbahn an der Führungsschiene verlagerbar geführt. Die Bewegungsbahn erstreckt sich parallel zur Schweißrichtung der Pressschweißeinrichtung. Durch die Führungsschiene kann der Durchgangsabschnitt während eines Schweißvorgangs entlang des Fügespalts verlagert werden. Dadurch kann eine lange Verbindungstruktur kontinuierlich, also ohne Absetzen und erneutes Ansetzen der Pressschweißeinrichtung, realisiert werden.

In einigen bevorzugten Ausführungsformen ist vorgesehen, dass die Führungsschiene den Gegenhalter bildet. Der Führungsschiene kommt also zusätzlich zu der Führung des Gestells entlang der Bewegungsbahn eine weitere Funktion zu. Aufgrund ihrer mechanischen Robustheit ist die Führungsschiene für die Ausbildung des Gegenhalters besonders geeignet.

In einigen anderen bevorzugten Ausführungsformen ist vorgesehen, dass das Gestell den Gegenhalter bildet.

In einigen bevorzugten Ausführungsformen ist vorgesehen, dass der Gegenhalter walzenförmig ausgebildet ist. Vorzugsweise ist der walzenförmige Gegenhalter um eine Drehachse drehbar, die senkrecht zu der Wirkrichtung der Druckkraft ausgerichtet ist. Durch einen solchen Gegenhalter kann die Verbindungstruktur kontinuierlich, also ohne Absetzen und erneutes Ansetzen der Pressschweißeinrichtung, realisiert werden. Vorzugsweise ist dem Gegenhalter eine Antriebseinheit, beispielsweise ein Elektromotor, zugeordnet, die dazu ausgebildet ist, den Gegenhalter um dessen Drehachse zu drehen. Der walzenförmige Gegenhalter hat vorzugsweise einen Durchmesser von wenigstens 20 mm, vorzugsweise wenigstens 50 mm, vorzugsweise wenigstens 100 mm, vorzugsweise wenigstens 200 mm. Der Durchmesser beträgt vorzugsweise höchstens 1000 mm, vorzugsweise höchstens 500 mm, vorzugsweise höchstens 200 mm, vorzugsweise höchstens 100 mm.

In einigen bevorzugten Ausführungsformen ist vorgesehen, dass die Pressschweißeinrichtung eine Halterung für eine Fügehilfe oder für eines der Werkstücke aufweist. Die Halterung kann als Rolle ausgebildet sein, die an der Pressschweißeinrichtung, insbesondere an dem Gestell, drehbar gelagert ist. Vorzugsweise ist eine Fügehilfe oder ein blechförmiges Werkstück auf die Halterung aufgerollt. Die Fügehilfe kann dabei bspw. drahtförmig oder blechförmig ausgebildet sein. Zum dosierten Zuführen können optional eine Antriebs- und/oder eine Bremseinheit angebracht sein. Führungselemente wie beispielsweise Gleitschienen oder Rollen können vorhanden sein, um einen definierten Transport zu unterstützen.

In einigen bevorzugten Ausführungsformen ist vorgesehen, dass die Werkstücke durch wenigstens eine Klemme aneinander lösbar befestigt sind. Die Klemme ist zusätzlich zu dem Pressschweißwerkzeug und dem Gegenhalter als Teil der Pressschweißanordnung vorhanden, um die Werkstücke von dem Pressschweißwerkzeug und dem Gegenhalter beabstandet lösbar aneinander zu befestigen. Vorzugsweise ist die Klemme unabhängig von dem Gestell handhabbar. Es kann also unabhängig von der Position des Gestells eine geeignete Position zum Anbringen der Klemme gewählt werden. Der Abstand der Klemmen von dem Gestell kann beispielsweise wenigstens 20 mm, wenigstens 50 mm, wenigstens 100 mm, wenigstens 200mm, oder wenigstens 500 mm betragen.

Vorzugsweise weist die Klemme eine erste Klemmbacke, eine zweite Klemmbacke und wenigstens ein, insbesondere längliches, Befestigungselement auf. Durch eine solche Klemme können beispielsweise nebeneinander angeordnete Werkstücke lösbar aneinander befestigt werden. Dabei werden die Klemmbacken auf einer jeweils anderen Seite der Werkstücke angeordnet. Das Befestigungselement wird vorzugsweise in dem Fügespalt angeordnet und verbindet die erste Klemmbacke mit der zweiten Klemmbacke. Das Befestigungselement kann bspw. als Befestigungsschraube ausgebildet sein.

Vorzugsweise weist die Klemme eine erste Klemmbacke, eine zweite Klemmbacke, ein Zwischenteil und wenigstens zwei, insbesondere längliche, Befestigungselemente auf. Durch eine solche Klemme können beispielsweise überlappend angeordnete Werkstücke lösbar aneinander befestigt werden. Dabei wird das Zwischenteil in dem Fügespalt zwischen den überlappenden Werkstücken angeordnet. Die Klemmbacken werden auf einer jeweils anderen Seite der Werkstücke angeordnet. Die erste Klemmbacke wird durch eines der Befestigungselemente mit dem Zwischenteil verbunden. Die zweite Klemmbacke wird durch das andere der Befestigungselemente mit dem Zwischenteil verbunden. Das Zwischenteil kann beispielsweise als Vierkantprofil ausgebildet sein.

In einigen bevorzugten Ausführungsformen ist vorgesehen, dass die Pressschweißeinrichtung wenigstens ein weiteres Pressschweißwerkzeug, insbesondere Rührreibschweißwerkzeug, mit einem weiteren Schweißelement aufweist. Durch eine Pressschweißeinrichtung mit zwei Pressschweißwerkzeugen können zwei Verbindungstrukturen gleichzeitig ausgebildet werden. Beispielsweise können zwei Werkstücke gleichzeitig mit derselben Fügehilfe verbunden werden. Vorzugsweise ist die Längsachse des Schweißelements parallel zu der Längsachse des weiteren Schweißelements ausgerichtet.

Zur weiteren Ausgestaltung der Pressschweißanordnung gemäß dem zweiten Aspekt können die im Zusammenhang mit dem ersten Aspekt offenbarten Merkmale dienen, insbesondere im Hinblick auf die Ausführung der Pressschweißeinrichtung.

Im Folgenden wird die Erfindung anhand der Zeichnungen näher erläutert, wobei gleiche und entsprechende Elemente gegebenenfalls lediglich einmal mit Bezugszeichen versehen sind. Es zeigen:
- Figur 1: eine Frontansicht einer Rührreibschweißeinrichtung gemäß einem ersten Ausführungsbeispiel;
- Figur 2: eine Seitenansicht der Rührreibschweißeinrichtung aus Figur 1;
- Figur 3: eine Schnittdarstellung der Rührreibschweißeinrichtung aus Figur 1;
- Figur 4: eine weitere Frontansicht der Rührreibschweißeinrichtung aus Figur 1;
- Figur 5: eine Seitenansicht einer Rührreibschweißeinrichtung gemäß einem zweiten Ausführungsbeispiel;
- Figur 6: eine Seitenansicht einer Rührreibschweißeinrichtung gemäß einem dritten Ausführungsbeispiel;
- Figur 7: eine Front einer Rührreibschweißeinrichtung gemäß einem vierten Ausführungsbeispiel;
- Figur 8: eine Frontansicht einer Rührreibschweißeinrichtung gemäß einem fünften Ausführungsbeispiel;
- Figur 9: eine Schnittdarstellung einer Rührreibschweißeinrichtung gemäß einem sechsten Ausführungsbeispiel;
- Figur 10: eine Frontansicht einer Rührreibschweißeinrichtung gemäß einem siebten Ausführungsbeispiel;
- Figur 11: eine Detailansicht der Rührreibschweißeinrichtung aus Figur 10;
- Figur 12: eine Frontansicht einer Rührreibschweißeinrichtung gemäß einem achten Ausführungsbeispiel;
- Figur 13: eine Seitenansicht der Rührreibschweißeinrichtung aus Figur 12;
- Figur 14: eine Seitenansicht einer Rührreibschweißeinrichtung gemäß einem neunten Ausführungsbeispiel;
- Figur 15: eine Frontansicht einer Rührreibschweißeinrichtung gemäß einem zehnten Ausführungsbeispiel;
- Figur 16: eine Frontansicht einer Rührreibschweißeinrichtung gemäß einem elften Ausführungsbeispiel;
- Figur 17: eine Schnittdarstellung der Rührreibschweißeinrichtung aus Figur 16;
- Figur 18: eine Frontansicht einer Rührreibschweißeinrichtung gemäß einem zwölften Ausführungsbeispiel;
- Figur 19: eine Schnittdarstellung der Rührreibschweißeinrichtung aus Figur 18;
- Figur 20: eine Klemme zum lösbaren Befestigen von zwei nebeneinander angeordneten Werkstücken;
- Figur 21: eine Klemme zum lösbaren Befestigen von zwei überlappend angeordneten Werkstücken; und
- Figur 22: eine Rührreibschweißeinrichtung, die mit einer Handhabungseinrichtung bewegungsgekoppelt ist.

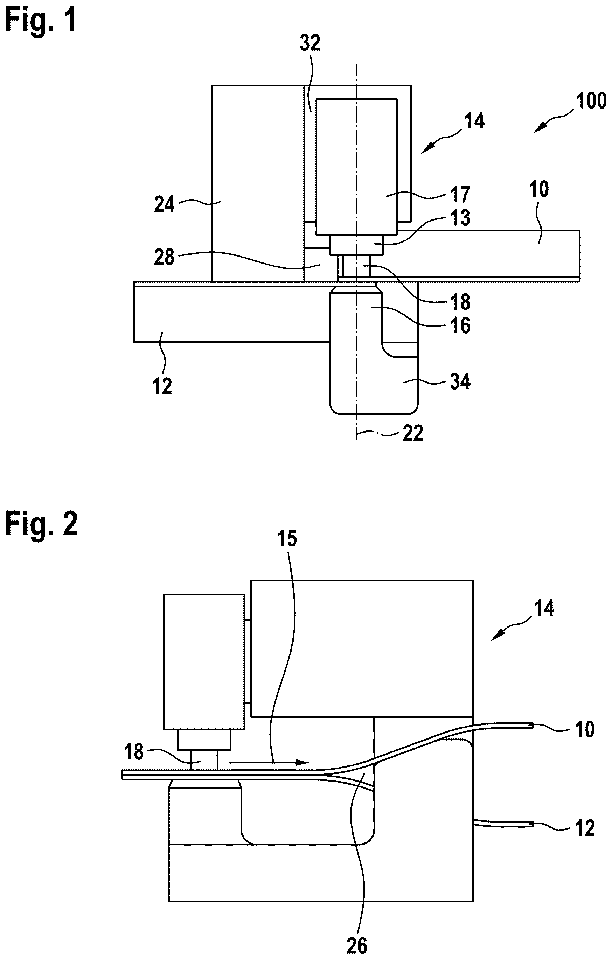

In den Figuren 1 bis 4 sind ein erstes Werkstück 10, ein zweites Werkstück 12 und eine Rührreibschweißeinrichtung 14 gemäß einem ersten Ausführungsbeispiel dargestellt. Die Werkstücke 10 und 12 und die Rührreibschweißeinrichtung 14 bilden gemeinsam eine Rührreibschweißanordnung 100.

Die Werkstücke 10 und 12 sind vorliegend aus einem Aluminiumwerkstoff gefertigt. Es sind aber auch davon abweichende Metallwerkstoffe möglich. Bspw. kann eines der Werkstücke 10 und 12 aus einem Aluminiumwerkstoff gefertigt sein und das andere aus einem Magnesiumwerkstoff oder aus Stahl.

Die Rührreibschweißeinrichtung 14 weist einen Gegenhalter 16 und ein Rührreibschweißwerkzeug 18 auf.

Auf der Werkzeugseite ist eine angetriebene Spindel 13 mit einer Werkzeugaufnahme (ohne Bezugszeichen) vorgesehen. Die Spindel 13 ist durch einen Antrieb 17 (in der Regel ein drehzahlgeregelter Elektromotor) antreibbar. Das Rührreibschweißwerkzeug 18 ist in der Werkzeugaufnahme der Spindel 13 aufgenommen.

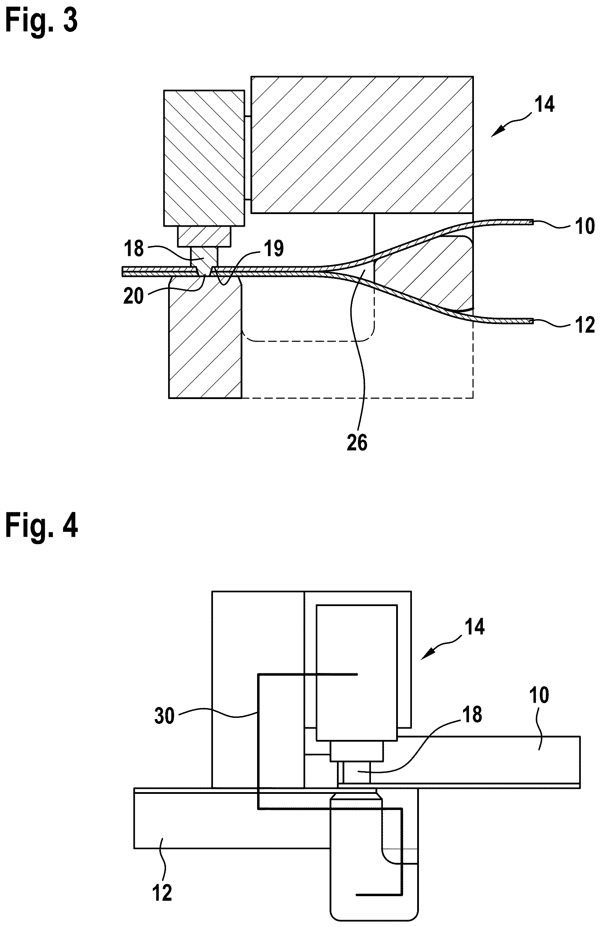

Das Rührreibschweißwerkzeug 18 weist ein Schweißelement 20 in Form eines Schweißstifts bzw. Pins auf, das um eine Drehachse 22 drehbar gelagert ist (s. Figur 3). Das Schweißelement kann von der Spindel 13 bzw. dem Antrieb 17 in Drehung versetzt werden. Das Schweißelement 20 ist unabhängig von dem Gegenhalter 16 um die Drehachse 22 drehbar.

Das Rührreibschweißwerkzeug 18 weist außerdem eine Schulter 19 auf, die als Anlagefläche des Rührreibschweißwerkzeugs 18 auf den zu verbindenden Werkstücken 10, 12 dient. Vorliegend sind die Schulter 19 und das Schweißelement 20 miteinander drehfest verbunden. Im Betrieb dreht sich also die Schulter 19 mit dem Schweißelement 20 mit. Alternativ kann das Rührreibschweißwerkzeug 18 auch mit einer "stehenden" (d.h. nicht rotierenden) Schulter 19 ausgebildet sein. Dann rotiert nur das Schweißelement 20 selbst.

Eine freie Stirnseite des Schweißelements 20 ist dem Gegenhalter 16 zugewandt. Das Schweißelement 20 liegt also dem Gegenhalter 16 gegenüber. Das Schweißelement 20 ist außerdem entlang der Drehachse 22 verlagerbar. Durch Verlagern des Schweißelements 20 entlang der Drehachse 22 kann der Abstand zwischen dem Gegenhalter 16 und dem Schweißelement 20 vergrößert oder verkleinert werden, um die Werkstücke 10 und 12 zwischen dem Schweißelement 20 und dem Gegenhalter 16 zu klemmen.

Die Rührreibschweißeinrichtung 14 weist außerdem ein Gestell 24 auf. Das Rührreibschweißwerkzeug 18 und der Gegenhalter 16 sind durch das Gestell 24 miteinander verbunden. Der Gegenhalter 16 wird vorliegend durch das Gestell 24 gebildet.

Die Werkstücke 10 und 12 sind durch die Rührreibschweißeinrichtung 14 zusammengedrückt. Vorliegend sind die Werkstücke 10 und 12 zwischen dem Rührreibschweißwerkzeug 18 und dem Gegenhalter 16 überlappend angeordnet und zwischen dem Rührreibschweißwerkzeug 18, vorliegend dem Schweißelement 20, und dem Gegenhalter 16 zusammengedrückt. Das Rührreibschweißwerkzeug 18 und der Gegenhalter 16 sind auf einer jeweils anderen Seite der Werkstücke 10 und 12 angeordnet und beaufschlagen die Werkstücke 10 und 12 mit einer Druckkraft. Die Druckkraft wird durch das Gestell 24 von dem Rührreibschweißwerkzeug 18 auf den Gegenhalter 16 übertragen. Wie in der Schnittdarstellung gemäß Figur 3 zu sehen ist, ist das freie Ende des Schweißelements 20 verjüngt ausgebildet und dringt in wenigstens eines der Werkstücke 10, 12 ein, vorliegend in beide Werkstücke 10 und 12.

Unter Zusammendrücken wird hier die Einwirkung von Druckkräften auf die Werkstücke 10, 12 verstanden, die durch das Rührreibschweißwerkzeug 18 und den Gegenhalter 16 aufgebracht werden. Die Druckkräfte von Gegenhalter 16 und Rührreibschweißwerkzeug 18 sind dabei einander entgegengesetzt und im Betrag in etwa gleich groß. Im Falle einer Überlappverbindung wird zumindest teilweise die Druckkraft von einem Werkstück 10, 12 auf das andere Werkstück 12, 10 übertragen. Im Fall von Stumpfstoßverbindungen (später noch näher erläutert) werden die Druckkräfte auf die beiden Werkstücke 10, 12 aufgeteilt. Auch eine Wirkung auf eine Fügehilfe (später noch näher erläutert) ist möglich. Zusammendrücken meint nicht, dass insbesondere das Schweißelement 20 zu den Werkstücken 10, 12 unbeweglich ist. Vielmehr führt das Schweißelement 20 beim Schweißen eine Relativbewegung zu den zusammengedrückten Werkstücken 10, 12 aus. Im zusammengedrückten Zustand kann mindestens eines der Werkstücke 10, 12 und/oder die Fügehilfe lokal durch das Schweißelement 20 erwärmt und plastifiziert werden.

Zwischen den zusammengedrückten Werkstücken 10 und 12 ist ein Fügespalt 26 gebildet. Der Fügespalt 26 ist der Spalt, der zwischen den zusammengedrückten Werkstücken 10 und 12 vor deren Verbindung vorhanden ist, und der beim Verbinden der Werkstücke 10 und 12 geschlossen wird.

Das Gestell 24 weist einen Durchgangsabschnitt 28 auf, der in dem Fügespalt 26 angeordnet ist. Der Durchgangsabschnitt 28 erstreckt sich derart durch den Fügespalt 26, dass ein dem Rührreibschweißwerkzeug 18 zugeordneter erster Teil des Gestells 24 auf einer ersten Seite der Werkstücke 10 und 12 angeordnet ist und ein dem Gegenhalter 16 zugeordneter zweiter Teil des Gestells 24 auf einer zweiten Seite der Werkstücke 10 und 12 angeordnet ist. In dem vorliegenden Ausführungsbeispiel erstreckt sich der Durchgangsabschnitt 28, bezogen auf die Frontansicht der Rührreibschweißeinrichtung 14, senkrecht zu der Drehachse 22 des Schweißelements 20.

Das Gestell 24 ist vorliegend, bezogen auf die Frontansicht der Rührreibschweißeinrichtung 14, S-förmig ausgebildet. Dies ist in Figur 4 durch die S-förmige Linie 30 verdeutlicht. Das S-förmig ausgebildete Gestell 24 weist einen ersten Abschnitt 32 auf, der auf der ersten Seite der Werkstücke 10 und 12 angeordnet ist und sich, bezogen auf die Frontansicht der Rührreibschweißeinrichtung 14, senkrecht zu der Drehachse 22 des Schweißelements 20 erstreckt. Das S-förmig ausgebildete Gestell 24 weist außerdem einen zweiten Abschnitt 34 auf, der auf der zweiten Seite der Werkstücke 10 und 12 angeordnet ist und sich, bezogen auf die Frontansicht der Rührreibschweißeinrichtung 14, senkrecht zu der Drehachse 22 des Schweißelements 20 erstreckt. Durch die Abschnitte 32 und 34 kann ein seitlicher Versatz zwischen dem Rührreibschweißwerkzeug 18 und dem Gegenhalter 16 ausgeglichen werden, der durch den Durchgangsabschnitt 28 eingebracht wird.

Bezogen auf die Seitenansicht (siehe Figur 2) ist das Gestell 24 C-förmig ausgebildet. Das Rührreibschweißwerkzeug 18 und der Gegenhalter 16 sind in einem vorderen Bereich der Rührreibschweißeinrichtung 14 angeordnet. Der Durchgangsabschnitt 28 ist in einem hinteren Bereich der Rührreibschweißeinrichtung 14 angeordnet. Bezogen auf eine Frontansicht der Rührreibschweißeinrichtung 14 ist das Rührreibschweißwerkzeug 18 also vor dem Gegenhalter 16 angeordnet.

Wie in den Figuren 2 und 3 zu sehen ist, sind die Werkstücke 10 und 12 derart gebogen, dass der Fügespalt 26 im Bereich des Durchgangsabschnitts 28 vergrößert ist. Hierzu sind die Werkstücke 10 und 12 jeweils entlang einer Biegeachse gebogen, die sich senkrecht zu der Schweißrichtung 15 der Rührreibschweißeinrichtung 14 erstreckt, aber in Biegerichtungen mit entgegengesetzter Orientierung. Alternativ können die Werkstücke 10 und 12 auch jeweils entlang einer Biegeachse gebogen sein, die windschief zu der Schweißrichtung 15 liegt. Das erste Werkstück 10 erstreckt sich oberhalb des Durchgangsabschnitts 28, vorliegend zwischen dem Durchgangsabschnitt 28 und dem ersten Abschnitt 32. Das zweite Werkstück 12 erstreckt sich unterhalb des Durchgangsabschnitts 28, vorliegend zwischen dem Durchgangsabschnitt 28 und dem zweiten Abschnitt 34.

Um die Werkstücke 10 und 12 miteinander zu verbinden, werden das Schweißelement 20 und die zusammengedrückten Werkstücke 10 und 12 relativ zueinander entlang einer Fügebahn verlagert. Das Schweißelement 20 wird dabei um die Drehachse 22 gedreht, vorzugsweise mit einer Drehzahl zwischen 250 U/min und 4000 U/min, besonders bevorzugt zwischen 750 U/min und 3000 U/min. Dies hat zur Folge, dass sich die Werkstücke 10 und 12 erwärmen und plastifiziert werden. Die Werkstücke 10 und 12 werden durch eine Verbindungsstruktur, vorliegend eine Verbindungsnaht, miteinander verbunden, deren Verlauf der Fügebahn entspricht. Das Gestell 24 kann beim Verbinden der Werkstücke 10 und 12 sukzessive entlang des Fügespalts 26 verlagert werden. Der Fügespalt 26 kann in der Folge sukzessive geschlossen werden, um die Werkstücke 10 und 12 auch in dem Bereich miteinander zu verbinden, in dem zuvor der Durchgangsabschnitt 28 angeordnet war.

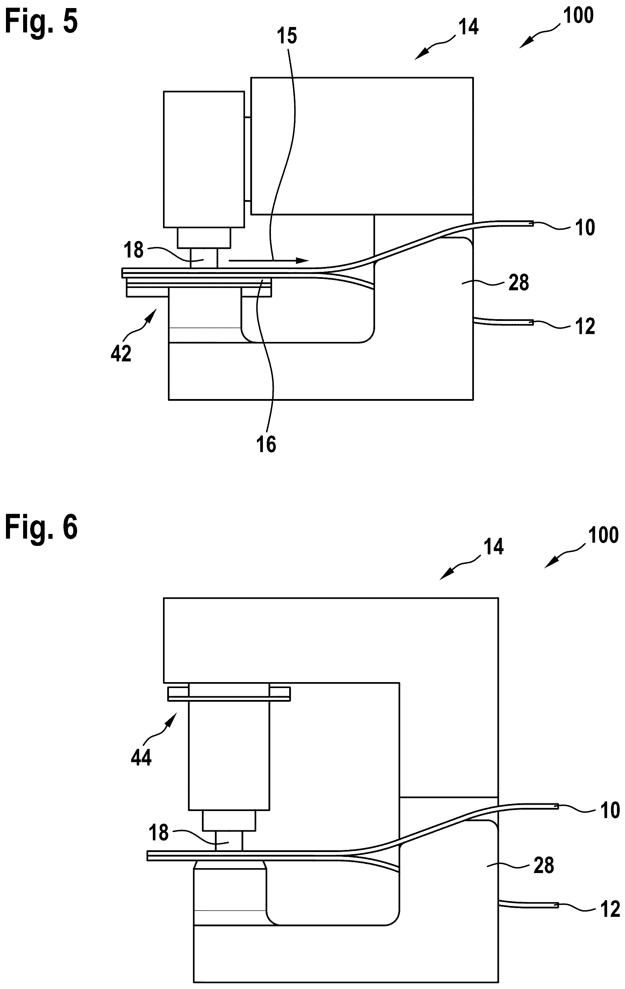

Figur 5 zeigt eine Rührreibschweißanordnung 100 mit einer Rührreibschweißeinrichtung 14 gemäß einem zweiten Ausführungsbeispiel. Im Folgenden wird nur auf die Unterschiede zu dem in den Figuren 1 bis 4 gezeigten Ausführungsbeispiel eingegangen.

Bei dem in Figur 5 gezeigten Ausführungsbeispiel ist der Gegenhalter 16 durch eine Linearführung 42 entlang einer Führungsachse an dem Gestell 24 verlagerbar geführt. Die Führungsachse erstreckt sich entlang der Schweißrichtung 15 der Rührreibschweißeinrichtung 14. Durch die Linearführung 42 kann eine Verlagerung des Schweißelements 20 relativ zu den zusammengedrückten Werkstücken 10 und 12 realisiert werden. Wird der Gegenhalter 16 entlang der Führungsachse verlagert, so werden die zusammengedrückten Werkstücke 10 und 12 mit dem Gegenhalter 16 mitverlagert. Es ergibt sich eine Relativbewegung zwischen den zusammengedrückten Werkstücken 10 und 12 und dem Schweißelement 20.

Figur 6 zeigt eine Rührreibschweißanordnung 100 mit einer Rührreibschweißeinrichtung 14 gemäß einem dritten Ausführungsbeispiel. Im Folgenden wird nur auf die Unterschiede zu dem in den Figuren 1 bis 4 gezeigten Ausführungsbeispiel eingegangen.

Bei dem in Figur 6 gezeigten Ausführungsbeispiel ist das Rührreibschweißwerkzeug 18 durch eine Linearführung 44 entlang einer Führungsachse an dem Gestell 24 verlagerbar geführt. Die Führungsachse erstreckt sich entlang der Schweißrichtung 15 der Rührreibschweißeinrichtung 14. Durch eine Verlagerung des Rührreibschweißwerkzeugs 18 entlang der Führungsachse wird eine Relativbewegung zwischen dem Schweißelement 20 und den zusammengedrückten Werkstücken 10 und 12 realisiert.

Das in Figur 6 gezeigte Ausführungsbeispiel hat durch die werkzeugseitige Anordnung des Vortriebs konstruktive Vorteile bei der Realisierung von Klemmvorrichtungen, die die Werkstücke 10, 12 auf dem Gegenhalter 16 gegen Verrutschen fixieren. Die Klemmvorrichtungen können über einen Aktuator verfügen, der einen Hub ausführt.

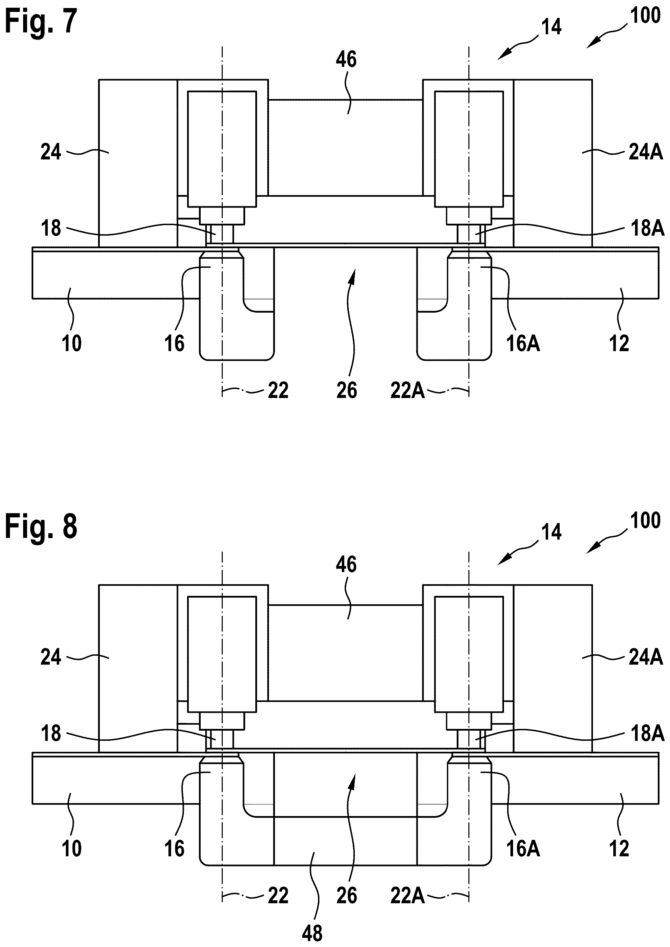

Figur 7 zeigt eine Rührreibschweißanordnung 100 mit einer Rührreibschweißeinrichtung 14 gemäß einem vierten Ausführungsbeispiel. Im Folgenden wird nur auf die Unterschiede zu dem in den Figuren 1 bis 4 gezeigten Ausführungsbeispiel eingegangen.

Bei dem in Figur 7 gezeigten Ausführungsbeispiel weist die Rührreibschweißeinrichtung 14 einen weiteren Gegenhalter 16A und ein weiteres Rührreibschweißwerkzeug 18A mit einem weiteren Schweißelement auf, das um eine weitere Drehachse 22A drehbar gelagert ist. Die Drehachsen 22 und 22A sind parallel zueinander ausgerichtet.

Die Rührreibschweißeinrichtung 14 umfasst außerdem ein weiteres Gestell 24A. Der weitere Gegenhalter 16A und das weitere Rührreibschweißwerkzeug 18A sind durch das weitere Gestell 24A miteinander verbunden. Das Gestell 24 und das weitere Gestell 24A sind spiegelbildlich ausgebildet.

Bei dem in Figur 7 gezeigten Ausführungsbeispiel sind die Werkstücke 10 und 12 nebeneinander, also voneinander beabstandet, angeordnet und durch die Rührreibschweißeinrichtung 14 zusammengedrückt. Die Werkstücke 10 und 12 werden mithilfe einer Fügehilfe 46 miteinander verbunden, die in oder auf dem Fügespalt 26 zwischen den Werkstücken 10 und 12 angeordnet wird. Der Fügespalt 26 wird also von der Fügehilfe 46 überdeckt.

Das erste Werkstück 10 und die Fügehilfe 46 überlappen und sind zwischen dem Rührreibschweißwerkzeug 18 und dem Gegenhalter 16 zusammengedrückt. Vorliegend ist die Fügehilfe 46 blechförmig ausgebildet. Das zweite Werkstück 12 und die Fügehilfe 46 überlappen und sind zwischen dem weiteren Rührreibschweißwerkzeug 18A und dem weiteren Gegenhalter 16A zusammengedrückt. Das erste Werkstück 10 erstreckt sich unterhalb des Durchgangsabschnitts 28 des Gestells 24. Das zweite Werkstück 12 erstreckt sich unterhalb eines Durchgangsabschnitts 28A des weiteren Gestells 24A. Die Fügehilfe 46 erstreckt sich oberhalb der Durchgangsabschnitte 28 und 28A.

Wird das Schweißelement 20 relativ zu dem ersten Werkstück 10 und der Fügehilfe 46 bewegt, so wird eine erste Verbindungsnaht ausgebildet, durch die das erste Werkstück 10 mit der Fügehilfe 46 verbunden wird. Wird das weitere Schweißelement 20A relativ zu dem zweiten Werkstück 12 und der Fügehilfe 46 bewegt, so wird eine zweite Verbindungsnaht ausgebildet, durch die das zweite Werkstück 12 mit der Fügehilfe 46 verbunden wird. Die Schweißelemente 20 und 20A können zeitgleich bewegt werden, sodass die Verbindungsnähte zeitgleich ausgebildet werden. Auch ein zyklisches Ausführen der beiden Verbindungsnähte ist denkbar.

Figur 8 zeigt eine Rührreibschweißanordnung 100 mit einer Rührreibschweißeinrichtung 14 gemäß einem fünften Ausführungsbeispiel. Im Unterschied zu dem in Figur 7 gezeigten Ausführungsbeispiel sind bei dem in Figur 8 gezeigten Ausführungsbeispiel das Gestell 24 und das weitere Gestell 24A durch eine Strebe 48 aneinander befestigt. In Figur 7 sind die beiden Gestelle 24 und 24A hingegen separat voneinander ausgebildet.

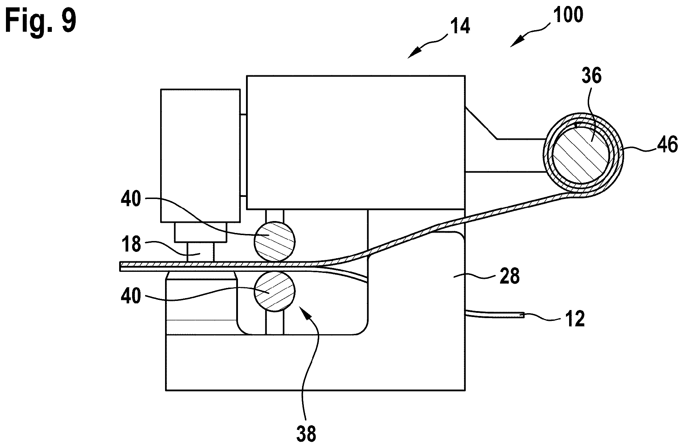

Figur 9 zeigt eine Rührreibschweißanordnung 100 mit einer Rührreibschweißeinrichtung 14 gemäß einem sechsten Ausführungsbeispiel. Im Folgenden wird nur auf die Unterschiede zu dem in den Figuren 1 bis 4 gezeigten Ausführungsbeispiel eingegangen.

Bei dem in Figur 9 gezeigten Ausführungsbeispiel weist die Rührreibschweißeinrichtung 14 eine Halterung 36 auf. Vorliegend ist die Halterung 36 als Rolle ausgebildet. Eine Fügehilfe 46 ist auf die Halterung 36 aufgerollt.

Die Rührreibschweißanordnung 14 weist außerdem eine Schließstruktur 38 auf, die zwischen dem Schweißelement 20 und dem Durchgangsabschnitt 28 angeordnet ist. Die Schließstruktur 38 ist dazu ausgebildet, den Fügespalt 26 beim Verlagern des Gestells 24 entlang des Fügespalts 26 zu schließen. Die Schließstruktur 38 führt also die Werkstücke 10 und 12 einander zu und bringt die Werkstücke 10 und 12 insbesondere miteinander in Kontakt. Vorliegend wird die Schließstruktur 38 durch zwei Rollen 40 gebildet, die auf einer jeweils anderen Seite der Werkstücke 10 und 12 angeordnet sind. Alternativ kann die Schließstruktur 38 auch durch zwei Gleitschuhe oder dergleichen gebildet sein. Die Schließstrukturen können Aktuatoren oder Kraftstellelemente, bspw. eine Pneumatik, eine Hydraulik, Federn oder dergleichen, aufweisen.

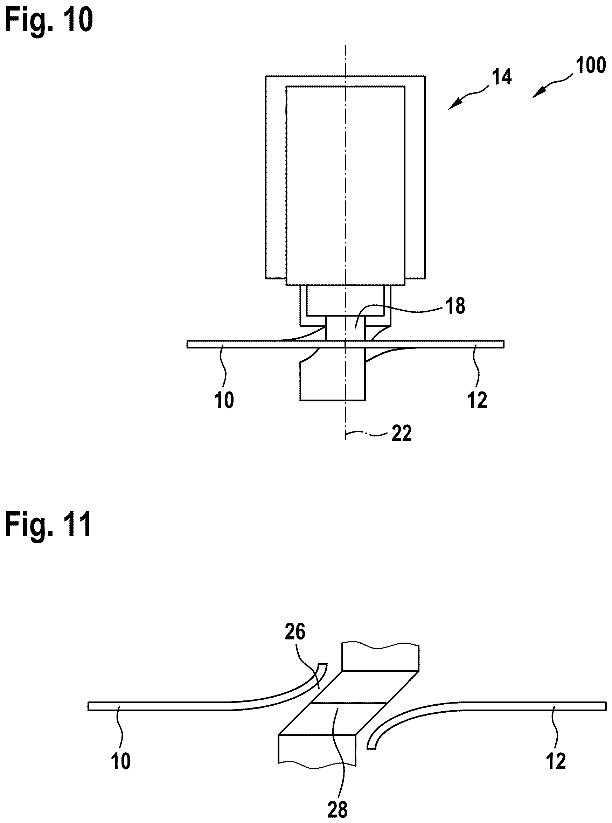

In den Figuren 10 und 11 ist eine Rührreibschweißanordnung 100 mit einer Rührreibschweißeinrichtung 14 gemäß einem siebten Ausführungsbeispiel gezeigt.

Bei dem siebten Ausführungsbeispiel sind die Werkstücke 10 und 12 nebeneinander angeordnet. Beide Werkstücke 10 und 12 sind zwischen dem Rührreibschweißwerkzeug 18 und dem Gegenhalter 16 zusammengedrückt. Der Durchgangsabschnitt 28 ist bei dem siebten Ausführungsbeispiel, bezogen auf die Frontansicht der Rührreibschweißeinrichtung 14, nicht senkrecht zu der Drehachse 22 ausgerichtet, sondern schräg zu der Drehachse 22. Vorliegend schließen der Durchgangsabschnitt 28 und die Drehachse 22 einen Winkel von etwa 45° ein. Vorteilhaft sind je nach Größe und Steifigkeit bzw. Dicke der Werkstücke 10, 12 Winkel zwischen 10° und 80° für die Neigung des Durchgangabschnitts 28.

Bei der Rührreibschweißanordnung 100 aus den Figuren 10 und 11 sind die Werkstücke 10 und 12 zur Vergrößerung des Fügespalts 26 im Bereich des Durchgangsabschnitts 28 jeweils um eine Biegeachse gebogen, die sich entlang der Schweißrichtung 15 erstreckt. Wie in Figur 11 zu sehen ist, sind die Werkstücke 10 und 12 in Biegerichtungen mit entgegengesetzter Orientierung gebogen.

Der schräg ausgerichtete Durchgangsabschnitt 28 ist zur Durchführung durch einen derartigen Fügespalt 26 besonders geeignet. Verglichen mit einem senkrecht erstreckten Durchgangsabschnitt 28 (s. bspw. die Figuren 1 bis 4) ergibt sich der Vorteil, dass der schräg erstreckte Durchgangsabschnitt 28 mechanisch robuster ist.

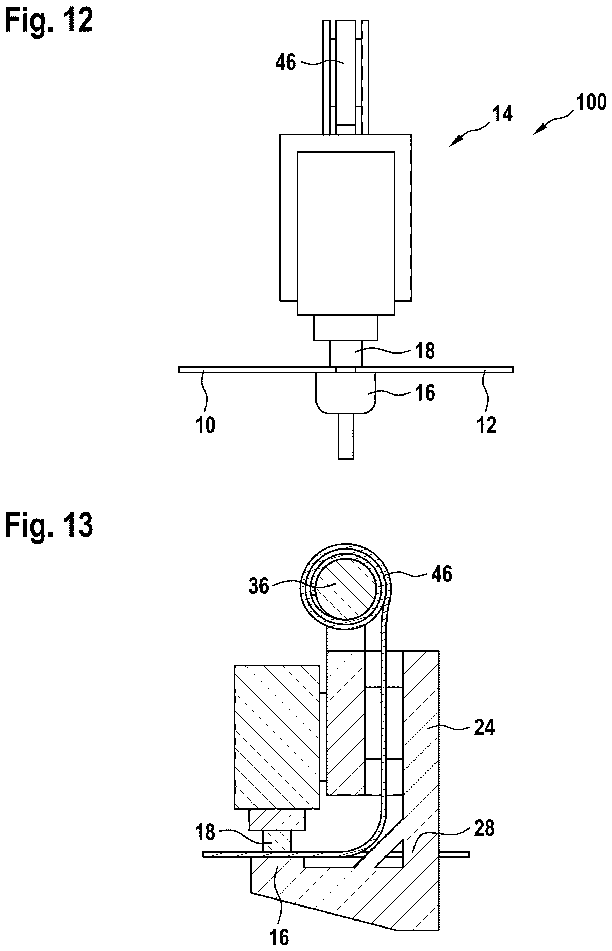

In den Figuren 12 und 13 ist eine Rührreibschweißanordnung 100 mit einer Rührreibschweißeinrichtung 14 gemäß einem achten Ausführungsbeispiel gezeigt.

Bei dem achten Ausführungsbeispiel sind die Werkstücke 10 und 12 nebeneinander angeordnet. Eine Fügehilfe 46 wird in dem Fügespalt 26 zwischen den beiden Werkstücken 10 und 12 angeordnet. Vorliegend ist die Fügehilfe 46 blechförmig oder bandförmig, die Breite der Fügehilfe 46 ist jedoch deutlich geringer als bei den Ausführungsbeispielen aus den Figuren 7 und 8. Die Fügehilfe 46 ist auf die Halterung 36 aufgerollt. Die Fügehilfe 46 kann aus einem Blech/Walzerzeugnis gefertigt sein, oder aber auch ein Extrusionsprofil sein.

Der Durchmesser des Schweißelements 20 ist größer als die Spaltbreite des Fügespalts 26. Das Schweißelement 20 kann folglich auf die Fügehilfe 46 und auf beide Werkstücke 10 und 12 gleichzeitig einwirken.

Bei der Rührreibschweißeinrichtung 14 gemäß dem achten Ausführungsbeispiel ist der Durchgangsabschnitt 28 des Gestells 24, bezogen auf die Frontansicht der Rührreibschweißeinrichtung 14, parallel zu der Drehachse 22 des Schweißelements 20 erstreckt. Die Breite des Durchgangsabschnitts 28 ist geringer als die Spaltbreite des Fügespalts 26. Folglich kann der Durchgangsabschnitt 28 in dem Fügespalt 26 angeordnet werden. Eine Verformung der Werkstücke 10 und 12 ist nicht erforderlich.

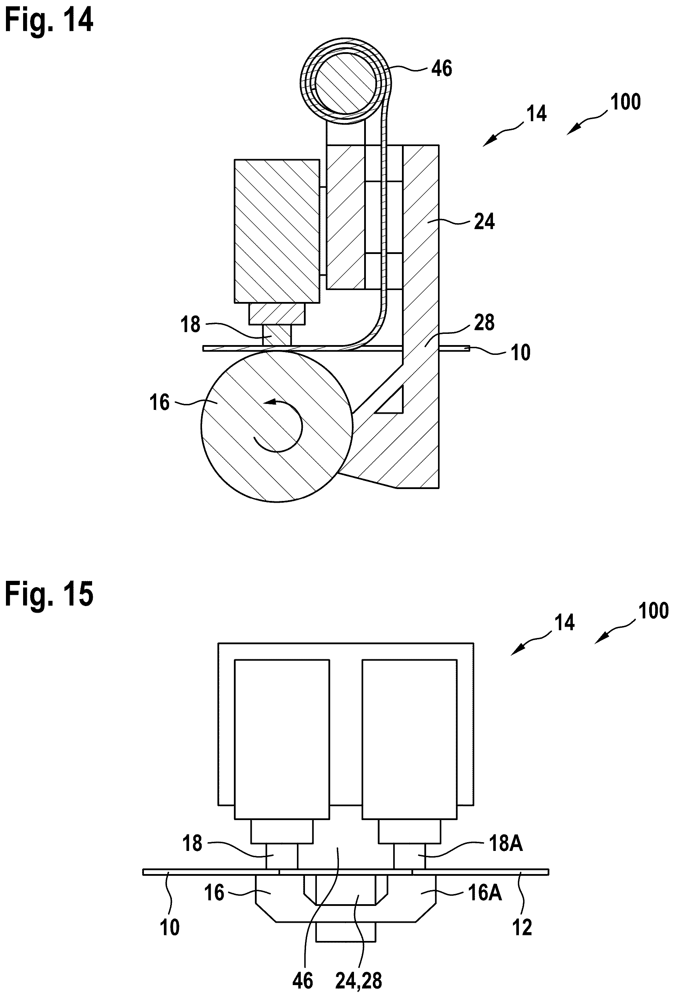

Figur 14 zeigt eine Rührreibschweißanordnung 100 mit einer Rührreibschweißeinrichtung 14 gemäß einem neunten Ausführungsbeispiel. Im Folgenden wird nur auf die Unterschiede zu der in den Figuren 12 und 13 gezeigten Rührreibschweißeinrichtung 14 eingegangen.

Bei der Rührreibschweißeinrichtung 14 gemäß dem neunten Ausführungsbeispiel ist der Gegenhalter 16 walzenförmig ausgebildet. Der Gegenhalter 16 ist um eine Drehachse drehbar gelagert, die senkrecht zu der Drehachse 22 des Schweißelements 20 und senkrecht zu der Schweißrichtung 15 ausgerichtet ist. Durch eine Drehung des Gegenhalters 16 können die Werkstücke 10 und 12 sowie die Fügehilfe 46 relativ zu dem Schweißelement 20 entlang der Fügebahn bewegt werden.

Figur 15 zeigt eine Rührreibschweißanordnung 100 mit einer Rührreibschweißeinrichtung 14 gemäß einem zehnten Ausführungsbeispiel.

Bei der Rührreibschweißanordnung 100 aus Figur 15 sind die Werkstücke 10 und 12 nebeneinander angeordnet. In dem Fügespalt zwischen den Werkstücken 10 und 12 wird eine Fügehilfe 46 angeordnet. Die Fügehilfe 46 ist blechförmig ausgebildet. Die Fügehilfe 46 ist neben den Werkstücken 10 und 12 angeordnet, also ohne Überlappung mit den Werkstücken 10 und 12.

Die Rührreibschweißeinrichtung 14 weist zwei Rührreibschweißwerkzeuge 18 und 18A und zwei Gegenhalter 16 und 16A auf. Die Rührreibschweißwerkzeuge 18 und 18A und die Gegenhalter 16 und 16A sind durch ein gemeinsames Gestell 24 miteinander verbunden. Das erste Werkstück 10 und die Fügehilfe 46 sind zwischen dem Rührreibschweißwerkzeug 18 und dem Gegenhalter 16 zusammengedrückt. Das zweite Werkstück 12 und die Fügehilfe 46 sind zwischen dem weiteren Rührreibschweißwerkzeug 18A und dem weiteren Gegenhalter 16A zusammengedrückt.

Aufgrund der großen Breite des Fügespalts 26 wird ein Gestell 24 mit einem Durchgangsabschnitt 28 verwendet, der, bezogen auf die Frontansicht der Rührreibschweißeinrichtung 14, parallel zu der Drehachse 22 des Schweißelements 20 erstreckt ist.

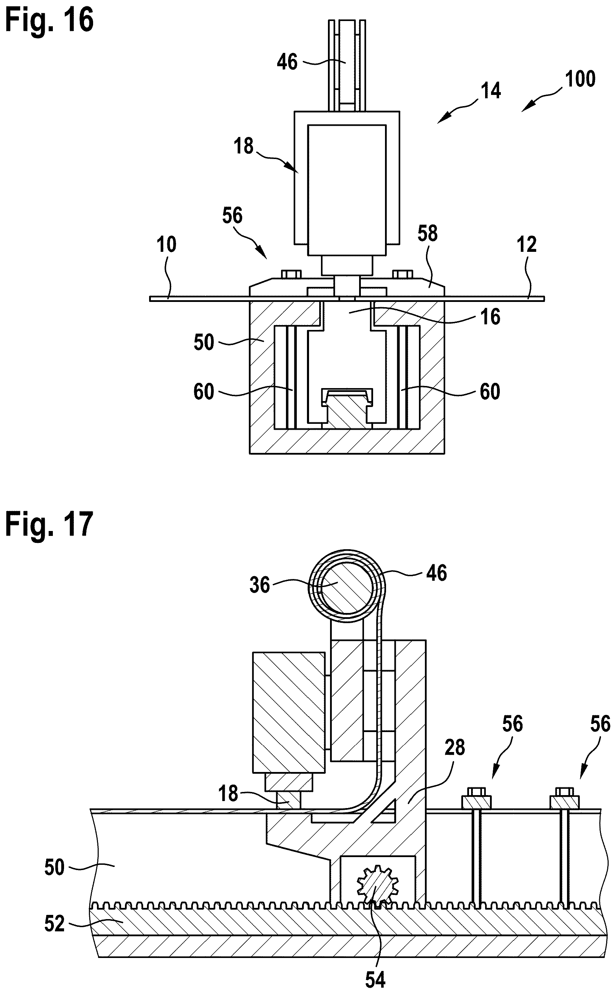

In den Figuren 16 und 17 ist eine Rührreibschweißanordnung 100 mit einer Rührreibschweißeinrichtung 14 gemäß einem elften Ausführungsbeispiel gezeigt.

Bei dem elften Ausführungsbeispiel sind die Werkstücke 10 und 12 nebeneinander angeordnet. In dem Fügespalt 26 zwischen den Werkstücken 10 und 12 wird eine Fügehilfe 46 angeordnet. Die Fügehilfe 46 ist vorliegend blechförmig oder bandförmig ausgebildet. Die Fügehilfe 46 ist auf der Halterung 36 aufgerollt gelagert. Die Werkstücke 10 und 12 und die Fügehilfe 46 sind zwischen dem Rührreibschweißwerkzeug 18 und dem Gegenhalter 16 zusammengedrückt.

Die Rührreibschweißeinrichtung 14 gemäß dem elften Ausführungsbeispiel umfasst eine Führungsschiene 50, auf der das Gestell 24 entlang einer Bewegungsbahn verlagerbar geführt ist. Vorliegend weist die Führungsschiene 50 einen U-förmigen Querschnitt auf. Die Führungsschiene 50 weist eine Zahnstange 52 auf, die mit einem Zahnrad 54 in Eingriff steht, das an dem Gestell 24 drehbar gelagert ist. Die Bewegungsbahn erstreckt sich parallel zu der Schweißrichtung 15 der Rührreibschweißeinrichtung 14.

Als Führungsschienen 50 können insbesondere Gleitführungen oder wälzgelagerte Linearführungen verwendet werden, insbesondere Kugelschinenführungen, Rollenschinenführungen, Laufrollenführungen oder Kugelbüchsenführungen. Neben Linearführungen können auch Führungselemente verwendet werden, die eine Führung entlang einer Kreisbahn erlauben. Auch Führungen, die komplexere Bewegungen ermöglichen, sind denkbar, wie bspw. Koppelgetriebe oder gebogene bzw. längs des Weges gekrümmte Führungselemente.

Bei der Rührreibschweißeinrichtung 14 gemäß dem elften Ausführungsbeispiel ist der Durchgangsabschnitt 28 des Gestells 24, bezogen auf die Frontansicht der Rührreibschweißeinrichtung 14, parallel zu der Drehachse 22 des Schweißelements 20 erstreckt. Die Breite des Durchgangsabschnitts 28 ist geringer als die Spaltbreite des Fügespalts 26. Folglich kann der Durchgangsabschnitt 28 in dem Fügespalt 26 angeordnet werden. Eine Verformung der Werkstücke 10 und 12 ist nicht erforderlich.

Die Werkstücke 10 und 12 sind auf einer von dem Rührreibschweißwerkzeug 18 abgewandten Seite des Durchgangsabschnitts 28 durch Klemmen 56 an der Führungsschiene 50 lösbar befestigt. Die Klemmen 56 weisen jeweils eine Klemmbacke 58 und zwei längliche Befestigungselemente 60 auf. Durch die Befestigungselemente 60 sind die Klemmbacken 58 derart an der Führungsschiene 50 befestigt, dass die Werkstücke 10 und 12 zwischen den Klemmbacken 58 und der Führungsschiene 50 eingeklemmt und dadurch lösbar befestigt sind.

Wird das Gestell 24 entlang der Bewegungsachse bewegt, so sind die Werkstücke 10 und 12 aufgrund der Klemmen 56 relativ zu der Linearführung 50 ortsfest. Durch die Bewegung des Gestells 24 wird also eine Relativbewegung zwischen den Werkstücken 10 und 12 und dem Schweißelement 20 realisiert, sodass die Werkstücke 10 und 12 unter Ausbildung einer Verbindungsnaht miteinander verbunden werden.

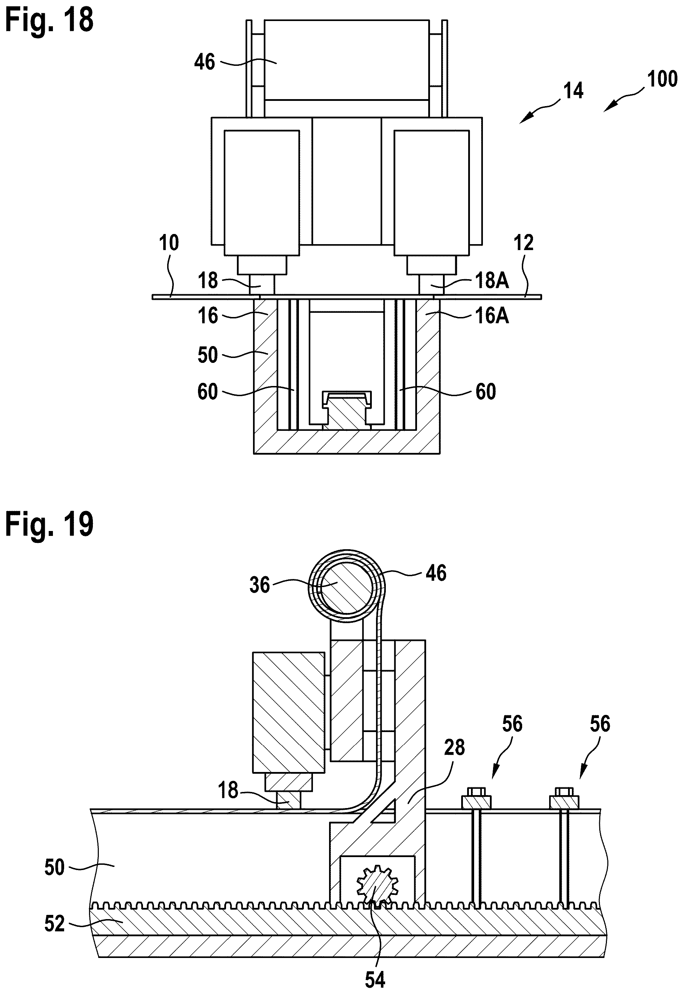

In den Figuren 18 und 19 ist eine Rührreibschweißanordnung 100 mit einer Rührreibschweißeinrichtung 14 gemäß einem zwölften Ausführungsbeispiel gezeigt.

Bei dem zwölften Ausführungsbeispiel sind die Werkstücke 10 und 12 nebeneinander angeordnet. In dem Fügespalt 26 zwischen den Werkstücken 10 und 12 wird eine Fügehilfe 46 angeordnet. Die Fügehilfe 46 ist vorliegend blechförmig ausgebildet. Die Fügehilfe 46 ist auf der Halterung 36 aufgerollt gelagert.

Bei dem zwölften Ausführungsbeispiel weist die Rührreibschweißeinrichtung 14 zwei Rührreibschweißwerkzeuge 18 und 18A sowie zwei Gegenhalter 16 und 16A auf. Das erste Werkstück 10 und die Fügehilfe 46 sind zwischen dem Rührreibschweißwerkzeug 18 und dem Gegenhalter 16 zusammengedrückt. Das zweite Werkstück 12 und die Fügehilfe 46 sind zwischen dem weiteren Rührreibschweißwerkzeug 18A und dem weiteren Gegenhalter 16A zusammengedrückt.

Auch die Rührreibschweißeinrichtung 14 gemäß dem zwölften Ausführungsbeispiel umfasst eine Führungsschiene 50 und Klemmen 56, wie zuvor im Zusammenhang mit dem elften Ausführungsbeispiel erläutert.

Bei der Rührreibschweißeinrichtung 14 gemäß dem zwölften Ausführungsbeispiel werden die Gegenhalter 16 und 16A durch die Führungsschiene 50 gebildet. Die Werkstücke 10 und 12 sind also zwischen den Rührreibschweißwerkzeugen 18 und 18A und der Führungsschiene 50 zusammengedrückt.

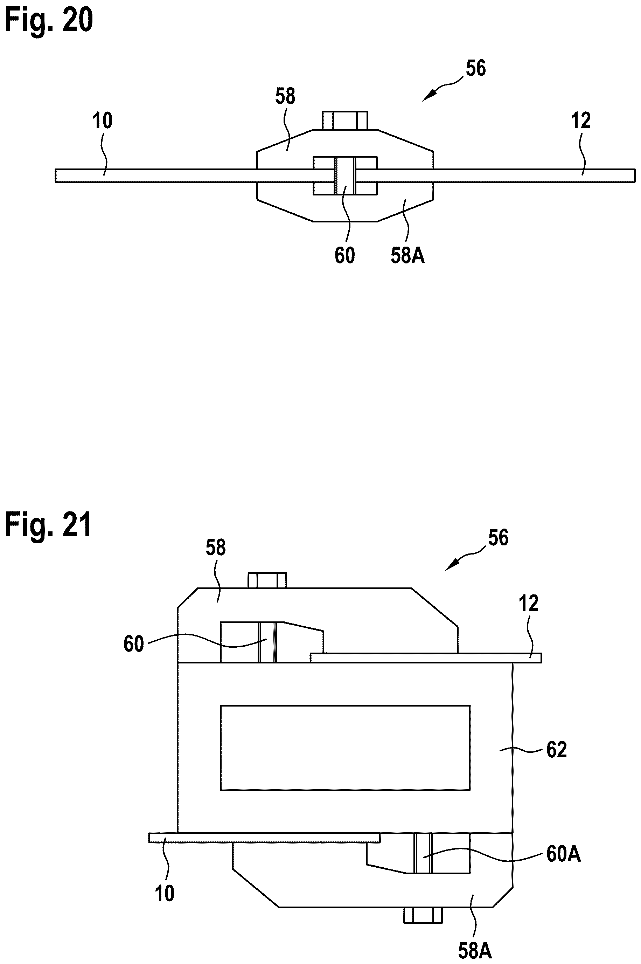

In Figur 20 ist eine weitere Klemme 56 gezeigt. Die Klemme 56 kann in einer Rührreibschweißanordnung 100 eingesetzt werden, bei der die Werkstücke 10 und 12 nebeneinander angeordnet sind. Die Klemme 56 weist eine erste Klemmbacke 58, eine zweite Klemmbacke 58A und ein längliches Befestigungselement 60 auf. Die Klemmbacken 58 und 58A sind auf einer jeweils anderen Seite der Werkstücke 10 und 12 angeordnet und durch das längliche Befestigungselement 60 aneinander lösbar befestigt. Das längliche Befestigungselement 60 ragt dabei durch den Fügespalt 26 hindurch.

In Figur 21 ist eine weitere Klemme 56 gezeigt. Die Klemme 56 kann in einer Rührreibschweißanordnung 100 eingesetzt werden, bei der die Werkstücke 10 und 12 überlappend angeordnet sind. Die Klemme 56 weist eine erste Klemmbacke 58, eine zweite Klemmbacke 58A, zwei längliche Befestigungselemente 60 und 60A sowie ein Zwischenteil 62 auf. Die Klemmbacken 58 und 58A sind auf einer jeweils anderen Seite der Werkstücke 10 und 12 angeordnet. Das Zwischenteil 62 ist zwischen den Werkstücken 10 und 12 angeordnet, also in dem Fügespalt 26. Die erste Klemmbacke 58 ist durch das Befestigungselement 60 an dem Zwischenteil 62 lösbar befestigt. Die zweite Klemmbacke 58A ist durch das andere Befestigungselement 60A an dem Zwischenteil 62 lösbar befestigt.

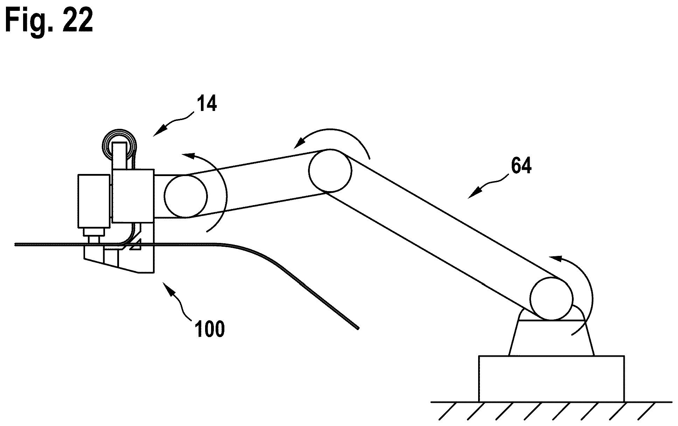

Figur 22 zeigt eine Rührreibschweißeinrichtung 14, die mit einer Handhabungseinrichtung 64 bewegungsgekoppelt ist. Die Rührreibschweißeinrichtung 14 kann durch die Handhabungseinrichtung 64 bewegt werden. Eine Bewegungskopplung mit der Handhabungseinrichtung 64 ist nicht auf die in Figur 22 gezeigte Rührreibschweißeinrichtung 14 beschränkt. Eine solche Bewegungskopplung kann auch im Zusammenhang mit anderen der zuvor beschriebenen Rührreibschweißeinrichtungen 14 genutzt werden.

Vorliegend ist die Handhabungseinrichtung 64 als Knickarmroboter ausgebildet. Es sind aber auch davon abweichende Handhabungseinrichtungen 64 denkbar, bspw. Parallel- oder Seriellkinematiken mit mindestens 1 und höchstens 8 Freiheitsgraden.

Linearführungen oder Führungen, die Kreisbahnen erlauben, sowie Koppelgetriebe können als Aktuatoren für entsprechend zugeordnete Schweißnahttrajektorien verwendet werden.

Als Antriebselemente kommen insbesondere Elektromotoren ohne oder mit entsprechenden Getrieben, Hydraulikmotoren oder elektrische Linearmotoren zum Einsatz. Auch die händische Positionierung entlang einer Führungsachse oder die freie händische Positionierung ist möglich. Hierzu können entsprechende Positionierhilfen wie beispielsweise Lehren oder Formstücke genutzt werden, die eine präzise Ausrichtung entlang des Fügespaltes 26 erlauben oder auch eine Positionierung frei nach Augenmaß.

In weiteren Ausführungsbeispielen können neben dem Schweißelement 20 und dem Gegenhalter 16 weitere Klemmvorrichtungen vorhanden sein. So können bspw. zusätzliche Stempel die Werkstücke 10, 12 auf den Gegenhalter 16 drücken, um ein Verrutschen aufgrund der Prozesskräfte zu verhindern. Es können als Klemmelemente Stempel, Walzen, etc. eingesetzt werden. Entsprechende Walzen können angetrieben oder auch nicht angetrieben sein. Die Klemmelemente können durch Kraftelemente wie Pneumatikzylinder, Hydraulikzylinder, elektromechanische Stellantriebe, elektromagnetische Stellantriebe, Federn etc. gegen die Werkstücke 10, 12 pressbar sein.

In den Figuren ist die Erfindung beispielhalber anhand einer Rührreibschweißeinrichtung 14 erläutert. Es kann aber auch eine abweichende Art von Pressschweißeinrichtung eingesetzt werden, bspw. eine Reibquetschschweißeinrichtung, eine Widerstandspunktschweißeinrichtung, eine Buckelschweißeinrichtung, eine Widerstandsrollennahtschweißeinrichtung, eine Ultraschallschweißeinrichtung, eine Ultraschallrollnahtschweißeinrichtung, eine Induktionspressschweißeinrichtung oder eine Lichtbogenpressschweißeinrichtung.

Die Offenbarung umfasst insbesondere die folgenden Ausführungsformen:
Ausführungsform 1: Verfahren zum Verbinden von Werkstücken (10,12) durch Pressschweißen, das Verfahren umfassend:
   - Bereitstellen einer Pressschweißeinrichtung (14), die wenigstens ein Pressschweißwerkzeug (18) mit einem Schweißelement (20), und wenigstens ein Gestell (24) mit einem Durchgangsabschnitt (28) aufweist;
   - Bereitstellen eines aus einem Metallwerkstoff gefertigten ersten Werkstücks (10);
   - Bereitstellen eines aus einem Metallwerkstoff gefertigten zweiten Werkstücks (12);
   - Zusammendrücken der Werkstücke (10,12) durch die Pressschweißeinrichtung (14), wobei wenigstens eines der Werkstücke (10,12) zwischen dem Pressschweißwerkzeug (18) und einem Gegenhalter (16) zusammengedrückt wird, wobei der Durchgangsabschnitt (28) des Gestells (24) in einem Fügespalt (26) zwischen den Werkstücken (10,12) angeordnet wird, und wobei durch den Durchgangsabschnitt (28) eine Druckkraft von dem Pressschweißwerkzeug (18) auf den Gegenhalter (16) übertragen wird, die auf das wenigstens eine zwischen dem Pressschweißwerkzeug (18) und dem Gegenhalter (16) zusammengedrückte Werkstück (10,12) wirkt; und
   - Verbinden der Werkstücke (10,12) unter Ausbildung wenigstens einer Verbindungsstruktur durch Pressschweißen.
Ausführungsform 2: Verfahren nach Ausführungsform 1, dadurch gekennzeichnet, dass das Pressschweißverfahren ein Rührreibschweißverfahren, ein Reibquetschschweißverfahren, ein Widerstandspunktschweißverfahren, ein Buckelschweißverfahren, ein Widerstandsrollennahtschweißverfahren, ein Ultraschallschweißverfahren, ein Ultraschallrollnahtschweißverfahren, ein Induktionspressschweißverfahren oder ein Lichtbogenpressschweißverfahren ist.
Ausführungsform 3: Verfahren nach einer der vorhergehenden Ausführungsformen, dadurch gekennzeichnet, dass wenigstens eines der Werkstücke (10,12) zur Vergrößerung des Fügespalts (26), insbesondere vorübergehend, verformt wird, insbesondere wobei das wenigstens eine Werkstück (10,12) elastisch und/oder plastisch verformt wird.
Ausführungsform 4: Verfahren nach Ausführungsform 3, dadurch gekennzeichnet, dass wenigstens eines der Werkstücke (10,12), insbesondere lokal, um eine Biegeachse gebogen wird, die sich senkrecht zur Schweißrichtung (15) der Pressschweißeinrichtung (14) erstreckt.
Ausführungsform 5: Verfahren nach einer der Ausführungsformen 3 und 4, dadurch gekennzeichnet, dass wenigstens eines der Werkstücke (10,12), insbesondere lokal, um eine Biegeachse gebogen wird, die sich entlang der Schweißrichtung (15) der Pressschweißeinrichtung (14) erstreckt.
Ausführungsform 6: Verfahren nach einer der Ausführungsformen 3 bis 5, dadurch gekennzeichnet, dass wenigstens eines der Werkstücke (10,12), insbesondere lokal, um eine Biegeachse gebogen wird, die sich windschief zur Schweißrichtung (15) der Pressschweißeinrichtung (14) erstreckt.
Ausführungsform 7: Verfahren nach einer der vorhergehenden Ausführungsformen, dadurch gekennzeichnet, dass das erste Werkstück (10) und das zweite Werkstück (12) überlappend angeordnet und durch die Pressschweißeinrichtung (14) zusammengedrückt werden.
Ausführungsform 8: Verfahren nach einer der Ausführungsformen 1 bis 6, dadurch gekennzeichnet, dass das erste Werkstück (10) und das zweite Werkstück (12) nebeneinander angeordnet und durch die Pressschweißeinrichtung (14) zusammengedrückt werden.
Ausführungsform 9: Verfahren nach einer der vorhergehenden Ausführungsformen, dadurch gekennzeichnet, dass eine Fügehilfe (46) in oder auf dem Fügespalt (26) angeordnet wird.
Ausführungsformen 10: Verfahren nach Ausführungsform 9, dadurch gekennzeichnet, dass das erste Werkstück (10), das zweite Werkstück (12) und die Fügehilfe (46) durch eine einzige Verbindungsstruktur miteinander verbunden werden.
Ausführungsform 11: Verfahren nach Ausführungsform 9, dadurch gekennzeichnet, dass das erste Werkstück (10) durch eine erste Verbindungsstruktur mit der Fügehilfe (46) verbunden wird, und dass das zweite Werkstück (12) zeitgleich oder zyklisch versetzt durch eine zweite Verbindungsstruktur mit der Fügehilfe (46) verbunden wird.
Ausführungsform 12: Verfahren nach einer der vorhergehenden Ausführungsformen, dadurch gekennzeichnet, dass der Durchgangsabschnitt (28) entlang des Fügespalts (26) verlagert wird, und dass die Verbindungsstruktur in einem zuvor durch den Durchgangsabschnitt (26) belegten Bereich des Fügespalts (26) ausgebildet wird.
Ausführungsform 13: Verfahren nach einer der vorhergehenden Ausführungsformen, dadurch gekennzeichnet, dass die Länge der hergestellten Verbindungsstruktur größer ist als der Abstand zwischen dem Schweißelement (20) und dem Durchgangsabschnitt (26).
Ausführungsform 14: Verfahren nach einer der vorhergehenden Ausführungsformen, dadurch gekennzeichnet, dass die Pressschweißeinrichtung (14) relativ zu den Werkstücken (10,12) verlagert wird, insbesondere durch einen Knickarmroboter, durch eine Seriell- oder Parallelkinematik mit wenigstens 1 und maximal 8 Freiheitsgraden, oder entlang einer physischen Bahn aus linearen und/oder gekurvten Führungselementen.
Ausführungsform 15: Pressschweißanordnung (100), umfassend:
   - ein aus einem Metallwerkstoff gefertigtes erstes Werkstück (10);
   - ein aus einem Metallwerkstoff gefertigtes zweites Werkstück (12); und
   - eine Pressschweißeinrichtung (14), die wenigstens ein Pressschweißwerkzeug (18) mit einem Schweißelement (20) und wenigstens ein Gestell (24) mit einem Durchgangsabschnitt (28) aufweist,
      wobei die Werkstücke (10,12) durch die Pressschweißeinrichtung (14) zusammengedrückt sind, derart, dass wenigstens eines der Werkstücke (10,12) zwischen dem Pressschweißwerkzeug (18) und einem Gegenhalter (16) zusammengedrückt ist, und
      wobei der Durchgangsabschnitt (28) des Gestells (24) in einem zwischen den Werkstücken (10,12) gebildeten Fügespalt (26) angeordnet ist und eine Druckkraft von dem Pressschweißwerkzeug (18) auf den Gegenhalter (16) überträgt, die auf das wenigstens eine zwischen dem Pressschweißwerkzeug (18) und dem Gegenhalter (16) zusammengedrückte Werkstück (10,12) wirkt.
Ausführungsform 16: Pressschweißanordnung (100) nach Ausführungsform 15, dadurch gekennzeichnet, dass sich der Durchgangsabschnitt (28), bezogen auf eine Frontansicht der Pressschweißeinrichtung (14), schräg oder senkrecht zu der Wirkrichtung der Druckkraft erstreckt.
Ausführungsform 17: Pressschweißanordnung (100) nach Ausführungsform 16, dadurch gekennzeichnet, dass das Gestell (24), bezogen auf die Frontansicht der Pressschweißeinrichtung (14), S-förmig ausgebildet ist.
Ausführungsform 18: Pressschweißanordnung (100) nach Ausführungsform 16, dadurch gekennzeichnet, dass der Durchgangsabschnitt (28) und die Wirkrichtung der Druckkraft, bezogen auf die Frontansicht der Pressschweißeinrichtung (14), einen Winkel zwischen 20° und 70° einschließen.
Ausführungsform 19: Pressschweißanordnung (100) nach Ausführungsform 15, dadurch gekennzeichnet, dass sich der Durchgangsabschnitt (28), bezogen auf die Frontansicht der Rührreibschweißeinrichtung (14), parallel zu der Wirkrichtung der Druckkraft erstreckt.
Ausführungsform 20: Pressschweißanordnung (100) nach Ausführungsform 19, dadurch gekennzeichnet, dass ein Durchmesser des Schweißelements (20) größer ist als eine Spaltbreite des Fügespalts (26), und dass eine Breite des Durchgangsabschnitts (28) kleiner ist als die Spaltbreite des Fügespalts (26).
Ausführungsform 21: Pressschweißanordnung (100) nach einer der Ausführungsformen 15 bis 20, dadurch gekennzeichnet, dass die Breite des Gestells (24) im Bereich des Durchgangsabschnitts (28) verringert ist.
Ausführungsform 22: Pressschweißanordnung (100) nach einer der Ausführungsformen 15 bis 21, dadurch gekennzeichnet,
   dass das Pressschweißwerkzeug (18) durch eine Linearführung (44) entlang einer Führungsachse an dem Gestell (24) verlagerbar geführt ist, wobei sich die Führungsachse entlang der Schweißrichtung (15) der Pressschweißeinrichtung (14) erstreckt, und/oder
   dass der Gegenhalter (16) durch eine Linearführung (42) entlang einer Führungsachse an dem Gestell (24) verlagerbar geführt ist, wobei sich die Führungsachse entlang der Schweißrichtung (15) der Pressschweißeinrichtung (14) erstreckt.
Ausführungsform 23: Pressschweißanordnung (100) nach einer der Ausführungsformen 15 bis 22, gekennzeichnet durch eine Führungsschiene (50), an der das Gestell (24) entlang einer Bewegungsbahn verlagerbar geführt ist, wobei sich die Bewegungsbahn entlang der Schweißrichtung (15) der Pressschweißeinrichtung (14) erstreckt.
Ausführungsform 24: Pressschweißanordnung (100) nach Ausführungsform 23, dadurch gekennzeichnet, dass die Führungsschiene (50) den Gegenhalter (16) bildet.
Ausführungsform 25: Pressschweißanordnung (100) nach einer der Ausführungsformen 15 bis 24, dadurch gekennzeichnet, dass der Gegenhalter (16) walzenförmig ausgebildet ist.
Ausführungsform 26: Pressschweißanordnung (100) nach einer der Ausführungsformen 15 bis 25, dadurch gekennzeichnet, dass die Pressschweißeinrichtung (14), insbesondere das Gestell (24), eine Halterung (36) für eine Fügehilfe (46) oder für eines der Werkstücke (10,12) aufweist.
Ausführungsform 27: Pressschweißanordnung (100) nach einer der Ausführungsformen 15 bis 26, dadurch gekennzeichnet, dass die Werkstücke (10,12) durch wenigstens eine Klemme (56) aneinander lösbar befestigt sind.
Ausführungsform 28: Pressschweißanordnung (100) nach einer der Ausführungsformen 15 bis 27, dadurch gekennzeichnet, dass die Pressschweißeinrichtung (14) wenigstens ein weiteres Pressschweißwerkzeug (18A) mit einem weiteren Schweißelement aufweist.

## Patentansprüche

1. Verfahren zum Verbinden von Werkstücken (10,12) durch Pressschweißen, das Verfahren umfassend:
- Bereitstellen einer Pressschweißeinrichtung (14), die wenigstens ein Pressschweißwerkzeug (18) mit einem Schweißelement (20), und wenigstens ein Gestell (24) mit einem Durchgangsabschnitt (28) aufweist;
- Bereitstellen eines aus einem Metallwerkstoff gefertigten ersten Werkstücks (10);
- Bereitstellen eines aus einem Metallwerkstoff gefertigten zweiten Werkstücks (12);
- Zusammendrücken der Werkstücke (10,12) durch die Pressschweißeinrichtung (14), wobei wenigstens eines der Werkstücke (10,12) zwischen dem Pressschweißwerkzeug (18) und einem Gegenhalter (16) zusammengedrückt wird, wobei der Durchgangsabschnitt (28) des Gestells (24) in einem Fügespalt (26) zwischen den Werkstücken (10,12) angeordnet wird, und wobei durch den Durchgangsabschnitt (28) eine Druckkraft von dem Pressschweißwerkzeug (18) auf den Gegenhalter (16) übertragen wird, die auf das wenigstens eine zwischen dem Pressschweißwerkzeug (18) und dem Gegenhalter (16) zusammengedrückte Werkstück (10,12) wirkt; und
- Verbinden der Werkstücke (10,12) unter Ausbildung wenigstens einer Verbindungsstruktur durch Pressschweißen.

2. Verfahren nach Anspruch 1, **dadurch gekennzeichnet, dass** das Pressschweißverfahren ein Rührreibschweißverfahren, ein Reibquetschschweißverfahren, ein Widerstandspunktschweißverfahren, ein Buckelschweißverfahren, ein Widerstandsrollennahtschweißverfahren, ein Ultraschallschweißverfahren, ein Ultraschallrollnahtschweißverfahren, ein Induktionspressschweißverfahren oder ein Lichtbogenpressschweißverfahren ist.

3. Verfahren nach einem der vorhergehenden Ansprüche, **dadurch gekennzeichnet, dass** wenigstens eines der Werkstücke (10,12) zur Vergrößerung des Fügespalts (26), insbesondere vorübergehend, verformt wird, insbesondere wobei das wenigstens eine Werkstück (10,12) elastisch und/oder plastisch verformt wird, insbesondere
- wobei wenigstens eines der Werkstücke (10,12), insbesondere lokal, um eine Biegeachse gebogen wird, die sich senkrecht zur Schweißrichtung (15) der Pressschweißeinrichtung (14) erstreckt, und/oder
- wobei wenigstens eines der Werkstücke (10,12), insbesondere lokal, um eine Biegeachse gebogen wird, die sich entlang der Schweißrichtung (15) der Pressschweißeinrichtung (14) erstreckt, und/oder
- wobei wenigstens eines der Werkstücke (10,12), insbesondere lokal, um eine Biegeachse gebogen wird, die sich windschief zur Schweißrichtung (15) der Pressschweißeinrichtung (14) erstreckt.

4. Verfahren nach einem der vorhergehenden Ansprüche, **dadurch gekennzeichnet,**
- **dass** das erste Werkstück (10) und das zweite Werkstück (12) überlappend angeordnet und durch die Pressschweißeinrichtung (14) zusammengedrückt werden, oder
- **dass** das erste Werkstück (10) und das zweite Werkstück (12) nebeneinander angeordnet und durch die Pressschweißeinrichtung (14) zusammengedrückt werden.

5. Verfahren nach einem der vorhergehenden Ansprüche, **dadurch gekennzeichnet, dass** eine Fügehilfe (46) in oder auf dem Fügespalt (26) angeordnet wird, insbesondere
- wobei das erste Werkstück (10), das zweite Werkstück (12) und die Fügehilfe (46) durch eine einzige Verbindungsstruktur miteinander verbunden werden, oder
- wobei das erste Werkstück (10) durch eine erste Verbindungsstruktur mit der Fügehilfe (46) verbunden wird, und wobei das zweite Werkstück (12) zeitgleich oder zyklisch versetzt durch eine zweite Verbindungsstruktur mit der Fügehilfe (46) verbunden wird.

6. Verfahren nach einem der vorhergehenden Ansprüche, **dadurch gekennzeichnet, dass** der Durchgangsabschnitt (28) entlang des Fügespalts (26) verlagert wird, und dass die Verbindungsstruktur in einem zuvor durch den Durchgangsabschnitt (26) belegten Bereich des Fügespalts (26) ausgebildet wird.

7. Verfahren nach einem der vorhergehenden Ansprüche, **dadurch gekennzeichnet, dass** die Länge der hergestellten Verbindungsstruktur größer ist als der Abstand zwischen dem Schweißelement (20) und dem Durchgangsabschnitt (26).

8. Verfahren nach einem der vorhergehenden Ansprüche, **dadurch gekennzeichnet, dass** die Pressschweißeinrichtung (14) relativ zu den Werkstücken (10,12) verlagert wird, insbesondere durch einen Knickarmroboter, durch eine Seriell- oder Parallelkinematik mit wenigstens 1 und maximal 8 Freiheitsgraden, oder entlang einer physischen Bahn aus linearen und/oder gekurvten Führungselementen.

9. Pressschweißanordnung (100), umfassend:
- ein aus einem Metallwerkstoff gefertigtes erstes Werkstück (10);
- ein aus einem Metallwerkstoff gefertigtes zweites Werkstück (12); und
- eine Pressschweißeinrichtung (14), die wenigstens ein Pressschweißwerkzeug (18) mit einem Schweißelement (20) und wenigstens ein Gestell (24) mit einem Durchgangsabschnitt (28) aufweist,
wobei die Werkstücke (10,12) durch die Pressschweißeinrichtung (14) zusammengedrückt sind, derart, dass wenigstens eines der Werkstücke (10,12) zwischen dem Pressschweißwerkzeug (18) und einem Gegenhalter (16) zusammengedrückt ist, und
wobei der Durchgangsabschnitt (28) des Gestells (24) in einem zwischen den Werkstücken (10,12) gebildeten Fügespalt (26) angeordnet ist und eine Druckkraft von dem Pressschweißwerkzeug (18) auf den Gegenhalter (16) überträgt, die auf das wenigstens eine zwischen dem Pressschweißwerkzeug (18) und dem Gegenhalter (16) zusammengedrückte Werkstück (10,12) wirkt.

10. Pressschweißanordnung (100) nach Anspruch 9, **dadurch gekennzeichnet, dass** sich der Durchgangsabschnitt (28), bezogen auf eine Frontansicht der Pressschweißeinrichtung (14), schräg oder senkrecht zu der Wirkrichtung der Druckkraft erstreckt, insbesondere
- wobei das Gestell (24), bezogen auf die Frontansicht der Pressschweißeinrichtung (14), S-förmig ausgebildet ist, oder
- wobei der Durchgangsabschnitt (28) und die Wirkrichtung der Druckkraft, bezogen auf die Frontansicht der Pressschweißeinrichtung (14), einen Winkel zwischen 20° und 70° einschließen.

11. Pressschweißanordnung (100) nach Anspruch 9, **dadurch gekennzeichnet, dass** sich der Durchgangsabschnitt (28), bezogen auf die Frontansicht der Rührreibschweißeinrichtung (14), parallel zu der Wirkrichtung der Druckkraft erstreckt, insbesondere
- wobei ein Durchmesser des Schweißelements (20) größer ist als eine Spaltbreite des Fügespalts (26), und wobei eine Breite des Durchgangsabschnitts (28) kleiner ist als die Spaltbreite des Fügespalts (26).

12. Pressschweißanordnung (100) nach einem der Ansprüche 9 bis 11, **dadurch gekennzeichnet, dass** die Breite des Gestells (24) im Bereich des Durchgangsabschnitts (28) verringert ist.

13. Pressschweißanordnung (100) nach einem der Ansprüche 9 bis 12, **dadurch gekennzeichnet,**
**dass** das Pressschweißwerkzeug (18) durch eine Linearführung (44) entlang einer Führungsachse an dem Gestell (24) verlagerbar geführt ist, wobei sich die Führungsachse entlang der Schweißrichtung (15) der Pressschweißeinrichtung (14) erstreckt, und/oder
**dass** der Gegenhalter (16) durch eine Linearführung (42) entlang einer Führungsachse an dem Gestell (24) verlagerbar geführt ist, wobei sich die Führungsachse entlang der Schweißrichtung (15) der Pressschweißeinrichtung (14) erstreckt.

14. Pressschweißanordnung (100) nach einem der Ansprüche 9 bis 13, **gekennzeichnet durch** eine Führungsschiene (50), an der das Gestell (24) entlang einer Bewegungsbahn verlagerbar geführt ist, wobei sich die Bewegungsbahn entlang der Schweißrichtung (15) der Pressschweißeinrichtung (14) erstreckt, insbesondere
- wobei die Führungsschiene (50) den Gegenhalter (16) bildet.

15. Pressschweißanordnung (100) nach einem der Ansprüche 9 bis 14, **dadurch gekennzeichnet, dass** die Pressschweißeinrichtung (14) wenigstens ein weiteres Pressschweißwerkzeug (18A) mit einem weiteren Schweißelement aufweist.
